(19) Europäisches Patentamt

European Patent Office

Office européen des brevets

(11) **EP 4 663 785 A1**

(12) **EUROPEAN PATENT APPLICATION**
published in accordance with Art. 153(4) EPC

(43) Date of publication:
**17.12.2025 Bulletin 2025/51**

(21) Application number: **23935362.6**

(22) Date of filing: **28.04.2023**

(51) International Patent Classification (IPC):
*C21D 9/46* [(2006.01)]   *C22C 38/00* [(2006.01)]
*C22C 38/60* [(2006.01)]   *C23C 2/06* [(2006.01)]

(52) Cooperative Patent Classification (CPC):
**C21D 9/46; C22C 38/00; C22C 38/60; C23C 2/06**

(86) International application number:
**PCT/JP2023/016787**

(87) International publication number:
**WO 2024/224584 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: JFE Steel Corporation
**Tokyo 100-0011 (JP)**

(72) Inventors:
• **TERASHIMA, Shotaro**
  **Tokyo 100-0011 (JP)**
• **NAKAGAITO, Tatsuya**
  **Tokyo 100-0011 (JP)**
• **KAWASAKI, Yoshiyasu**
  **Tokyo 100-0011 (JP)**
• **ASAKAWA, Taiyo**
  **Tokyo 100-0011 (JP)**

(74) Representative: Haseltine Lake Kempner LLP
**Bürkleinstrasse 10
80538 München (DE)**

(54) **GALVANIZED STEEL SHEET, MEMBER, AND PRODUCTION METHODS THEREFOR**

(57)     To provide a technique of a galvanized steel sheet that has a high yield ratio, high bendability, and high hydrogen embrittlement resistance, and has a TS of 980 MPa or more and less than 1470 MPa.

A galvanized steel sheet that has a steel microstructure containing, in terms of area fraction, ferrite: less than 50%, a total of martensite and bainite: 50% or more, and retained austenite: 10% or less, 75% or more of martensite having carbide with an average grain size of 50 nm or more and 200 nm or less, a ratio TM1/TM2 of an area fraction TM1 of tempered martensite to the entire microstructure in a region from the surface to 1/8 of the sheet thickness to an area fraction TM2 of the tempered martensite to the entire microstructure in a region from 1/8 to 3/8 of the sheet thickness being 0.70 or more, and that has a galvanized layer on the surface thereof, wherein the galvanized steel sheet has a TS of 980 MPa or more and less than 1470 MPa and a yield ratio of 0.60 or more, and the amount of diffusible hydrogen is 0.45 ppm by mass or less.

**Description**

Technical Field

The present invention relates to a high-strength galvanized steel sheet with high workability, a member manufactured using the high-strength galvanized steel sheet as a material, and a method for manufacturing them. A galvanized steel sheet according to the present invention can be suitably used mainly for applications as an automotive steel sheet.

Background Art

In recent years, from the perspective of global environmental conservation, there has been a strong demand for improvement of fuel efficiency toward reduction of CO2 emissions of automobiles. Along with this, there has been an active movement to reduce the weight of vehicle bodies by reducing the thickness of vehicle body parts, and there is an increasing need to increase the strength of steel sheets that are materials for vehicle body parts. In particular, from the perspective of ensuring crash safety of an automobile, a steel sheet material used around a cabin is required to have not only high tensile strength but also high yield strength. Furthermore, it is also necessary to have press formability so as not to impair the degree of freedom of the part shape due to the increase in strength. Furthermore, as corrosion progresses during use as an automotive part, the original material strength may not be maintained in the event of a collision, so that the use of hot-dip galvanized steel sheets with high corrosion resistance is becoming more widespread.

On the other hand, reinforcement of a steel sheet involves a concern about the occurrence of hydrogen embrittlement. Hydrogen embrittlement of a high-strength steel sheet may be caused not only by externally introduced hydrogen due to corrosion or the like during use, but also by hydrogen introduced during the production process. In particular, in the case of a hot-dip galvanized steel sheet, as a typical method, the steel sheet is manufactured by continuously performing a series of steps from annealing to hot-dip galvanizing treatment in a hydrogen-containing atmosphere for the purpose of suppressing reduction and oxidation of the steel sheet. Thus, a galvanized layer is formed in a state in which hydrogen introduced into the steel from the atmosphere remains. Since hydrogen diffusion during galvanization is very slow and becomes a barrier against the release of diffusible hydrogen in the steel to the outside, diffusible hydrogen may remain, and hydrogen embrittlement during working may promote crack initiation, which incur a risk of causing deterioration of local ductility, in particular, bendability. Thus, it is important to establish a hot-dip galvanized steel sheet with high hydrogen embrittlement resistance in which the amount of hydrogen in the steel is sufficiently reduced, and a method for manufacturing the hot-dip galvanized steel sheet.

With respect to problems related to workability and hydrogen embrittlement resistance of a high-strength hot-dip galvanized steel sheet, for example, Patent Literature 1 discloses a high-strength hot-dip galvanized steel sheet with high bendability and a method for manufacturing the high-strength hot-dip galvanized steel sheet. Patent Literature 2 discloses a high-strength steel sheet with high ductility and delayed fracture resistance and with a TS of 900 MPa or more, a method for manufacturing a high-strength cold-rolled steel sheet, and a method for manufacturing a high-strength galvanized steel sheet.

Citation List

Patent Literature

PTL 1: International Publication No. WO 2016/113788
PTL 2: Japanese Unexamined Patent Application Publication No. 2011-111671

Summary of Invention

Technical Problem

However, Patent Literature 1 describes improvement of bendability by refinement of martensite grains but does not disclose a method for improving hydrogen embrittlement resistance. Patent Literature 2 describes satisfying both ductility and hydrogen embrittlement resistance and describes hydrogen embrittlement resistance after working, but does not describe improvement of hydrogen embrittlement resistance caused by hydrogen in the steel introduced during production.

From the production methods disclosed in Patent Literature 1 and Patent Literature 2, it is thought that a large amount of hydrogen remains in the steel, and there is a risk of hydrogen embrittlement in a working process, such as deterioration of bendability or crack initiation in a nugget of a spot weld.

The present invention has been made in view of the above circumstances and aims to provide a galvanized steel sheet that is suitable for automotive applications, has a high yield ratio (YR), high bendability, and high hydrogen embrittlement resistance, and has a tensile strength (TS) of 980 MPa or more and less than 1470 MPa, a member, and a method for manufacturing them.

The term "high yield ratio", as used herein, means that a JIS No. 5 test piece for tensile test (JIS Z 2201) taken in the direction perpendicular to the rolling direction has a YR of 0.60 or more at a strain rate of $10^{-3}$/s in a tensile test according to the provisions of JIS Z 2241 (2011).

The tensile strength (TS) refers to tensile strength determined by taking a JIS No. 5 test piece for tensile test (JIS Z 2201) in the direction perpendicular to the rolling direction and performing a tensile test according to the provisions of JIS Z 2241 (2011) at a strain rate of $10^{-3}$/s.

The phrase "high bendability" means that a 35 mm x 100 mm strip specimen is taken from a galvanized steel sheet such that the direction parallel to the rolling direction becomes a bending test axis, a 90-degree V-bending test is performed at a stroke speed of 50 mm/s, at an indentation load of 10 ton, for a press holding time of 5 seconds, and at various bending radii, a ridge line portion of a bending peak of the test specimen is observed with a 10x magnifier, R/t is calculated by dividing a minimum bending radius R (mm) at which a crack with a length of 0.5 mm or more is not recognized by the sheet thickness (mm), and any of the following (A), (B), and (C) is satisfied.

(A) TS: 980 MPa or more and less than 1100 MPa and R/t: 5.0 or less
(B) TS: 1100 MPa or more and less than 1300 MPa and R/t: 6.0 or less
(C) TS: 1300 MPa or more and less than 1470 MPa and R/t: 7.0 or less

The phrase "high hydrogen embrittlement resistance" means that a nugget formed by spot welding by the following method has a crack of 100 μm or less.

(1) A spacer with a thickness of 2 mm is placed at both ends of a 30 mm x 100 mm test specimen taken from a galvanized steel sheet, and the center between the spacers is spot-welded to prepare a welded specimen.
(2) For the spot welding, an inverter DC resistance spot welding machine is used, and a dome-shaped electrode with a tip diameter of 6 mm made of chromium copper is used. The welding pressure is 380 kgf, the weld time is 16 cycles/50 Hz, and the holding time is 5 cycles/50 Hz.
(3) The welding current value is adjusted so as to form a nugget diameter corresponding to TS. The nugget diameter is 3.8 mm at a TS of 980 MPa or more and less than 1250 MPa or 4.8 mm at a TS of 1250 MPa or more and less than 1470 MPa.
(4) After leaving it for 24 hours from the spot welding, the spacer portions are cut off to observe a cross section of the nugget.

Solution to Problem

The present inventors have conducted intensive studies to solve the above problems. As a result, it was found that the amount of diffusible hydrogen in the steel can be reduced by optimizing the steel sheet microstructure and appropriately controlling the precipitation form of carbide in the steel to utilize the carbide as a hydrogen trap site, thereby making it possible to manufacture a high-strength galvanized steel sheet with a high yield ratio, high bendability, and a low crack initiation risk in a nugget of a spot weld.

The present invention has been accomplished on the basis of these findings, and the gist thereof is described below.

[1] A galvanized steel sheet including: a base steel sheet; and a galvanized layer formed on a surface of the base steel sheet, wherein

the base steel sheet has a steel microstructure including, in terms of area fraction, ferrite: less than 50%, a total of martensite and bainite: 50% or more, and retained austenite: 10% or less,
75% or more by area of the martensite is tempered martensite containing carbide with an average grain size of 50 nm or more and 200 nm or less,
a ratio TM1/TM2 of an area fraction TM1 of the tempered martensite to an entire microstructure in a region from the surface to 1/8 of a sheet thickness to an area fraction TM2 of the tempered martensite to the entire microstructure in a region from 1/8 to 3/8 of the sheet thickness is 0.70 or more,
the galvanized steel sheet has a tensile strength of 980 MPa or more and less than 1470 MPa, the galvanized steel sheet has a yield ratio of 0.60 or more, and
an integrated amount of hydrogen released when the base steel sheet from which the galvanized layer is peeled off is heated from room temperature to 200°C is 0.45 ppm by mass or less.

[2] The galvanized steel sheet according to [1], wherein

the base steel sheet has a steel component containing, on a mass percent basis,
C: 0.080% or more and 0.300% or less,
Si: 0.01% or more and 2.00% or less,
Mn: 1.00% or more and 4.00% or less,
P: 0.10% or less,
S: 0.0200% or less,
Al: 0.003% or more and 0.100% or less, and
N: 0.0100% or less, and
the remainder is composed of Fe and incidental impurities.

[3] The galvanized steel sheet according to [2], wherein

the steel component further contains, on a mass percent basis,
at least one selected from
B: 0.0100% or less,
Ti: 0.200% or less,
Nb: 0.200% or less,
Sb: 0.200% or less,
Sn: 0.200% or less,
V: 0.100% or less,
Cu: 2.00% or less,
Cr: 2.00% or less,
Ni: 2.00% or less,
Mo: 1.00% or less,
Ta: 0.100% or less,
W: 0.500% or less,
Zr: 0.020% or less,
Ca: 0.0200% or less,
Mg: 0.0200% or less,
Zn: 0.020% or less,
Co: 0.020% or less,
Ce: 0.0200% or less,
Se: 0.0200% or less,
Te: 0.0200% or less,
Ge: 0.0200% or less,
As: 0.0200% or less,
Sr: 0.0200% or less,
Cs: 0.0200% or less,
Hf: 0.0200% or less,
Pb: 0.0200% or less,
Bi: 0.0200% or less, and
REM (excluding Ce): 0.0200% or less.

[4] The galvanized steel sheet according to any one of [1] to [3], wherein the galvanized layer is a galvannealed layer.
[5] The galvanized steel sheet according to any one of [1] to [4], wherein when the base steel sheet from which the galvanized layer is peeled off is heated from room temperature to 600°C, an integrated amount of hydrogen released in a temperature range of 350°C to 600°C is 0.05 ppm by mass or more.
[6] A member produced by using the galvanized steel sheet according to any one of [1] to [5].
[7] A method for manufacturing a galvanized steel sheet, the method including:

a hot rolling step of heating a slab with the steel component according to [2] or [3] to a temperature range of 1100°C to 1350°C, hot-rolling the slab at a finish rolling delivery temperature of 800°C to 950°C, and coiling the hot-rolled slab at a coiling temperature of 650°C or less;

an oxidation step of heating a steel sheet after the hot rolling step to 600°C or more in an oxidizing atmosphere with an oxygen concentration of 1000 ppm by volume or more and 30000 ppm by volume or less;

a reduction step of holding the steel sheet after the oxidation step at 700°C or more for 20 seconds or more in a reducing atmosphere with a dew point of -20°C or less and a hydrogen concentration of 8% or more by volume and 30% or less by volume;

a soaking step of holding the steel sheet after the reduction step at 750°C or more for 20 seconds or more and 300 seconds or less in a soaking atmosphere with a dew point of -20°C or less and a hydrogen concentration of 0.2% or more by volume and 8% or less by volume;

a first cooling step of cooling the steel sheet after the soaking step;

a galvanization step of forming a galvanized layer on a surface of the steel sheet after the first cooling step;

a second cooling step of cooling the steel sheet after the galvanization step to a cooling stop temperature of 100°C or less at an average cooling rate of 20°C/s or less from a temperature range of 350°C to 450°C down to (Ms temperature - 100°C) while the steel sheet is retained in a temperature range of 100°C to 200°C for 5 seconds or more; and

a reheating step of holding the steel sheet after the second cooling step in a temperature range of 100°C to 450°C for 5 to 600 seconds.

[8] The method for manufacturing a galvanized steel sheet according to [7], wherein after the galvanization step, forming the galvanized layer on the surface of the steel sheet is followed by alloying treatment.

[9] The method for manufacturing a galvanized steel sheet according to [7] or [8], including a cold rolling step of performing cold rolling at a rolling reduction of 20% or more after the hot rolling step and before the oxidation step.

[10] The method for manufacturing a galvanized steel sheet according to any one of [7] to [9], wherein in the first cooling step, the steel sheet after the soaking step is cooled from 600°C to 900°C down to 150°C to 500°C at an average cooling rate of 20°C/s or less in an atmosphere with a hydrogen concentration of 0.5% or more by volume and 30% or less by volume and with a dew point of 0°C or less.

[11] The method for manufacturing a galvanized steel sheet according to any one of [7] to [10], wherein in the second cooling step, cooling is performed to a cooling stop temperature of 100°C or less at an average cooling rate of 10°C/s or less from a temperature range of 350°C to 450°C down to (Ms temperature - 100°C) while the steel sheet is retained in a temperature range of 100°C to 200°C for 10 seconds or more.

[12] A method for manufacturing a member, including a step of subjecting the galvanized steel sheet according to any one of [1] to [5] to at least one of forming and joining to manufacture a member.

Advantageous Effects of Invention

A galvanized steel sheet provided according to the present invention has a tensile strength of 980 MPa or more and less than 1470 MPa, a yield ratio of 0.60 or more, and high bendability and hydrogen embrittlement resistance.

A member provided according to the present invention has a tensile strength of 780 MPa or more and less than 1180 MPa, a yield ratio of 0.60 or more, and high bendability, stretch flangeability, and hydrogen embrittlement resistance.

Description of Embodiments

The present invention will be described in detail below.

<Galvanized Steel Sheet>

A galvanized steel sheet according to the present invention is a galvanized steel sheet including a base steel sheet and a galvanized layer formed on a surface of the base steel sheet, wherein the base steel sheet has a steel microstructure including, in terms of area fraction, ferrite: less than 50%, a total of martensite and bainite: 50% or more, and retained austenite: 10% or less, 75% or more by area of martensite has carbide with an average grain size of 50 nm or more and 200 nm or less, a ratio TM1/TM2 of an area fraction TM1 of the tempered martensite to an entire microstructure in a region from the surface to 1/8 of a sheet thickness to an area fraction TM2 of the tempered martensite to the entire microstructure in a region from 1/8 to 3/8 of the sheet thickness is 0.70 or more, the galvanized steel sheet has a tensile strength of 980 MPa or more and less than 1470 MPa, the galvanized steel sheet has a yield ratio of 0.60 or more, and an integrated amount of hydrogen released when the base steel sheet from which the galvanized layer is peeled off is heated from room temperature to 200°C is 0.45 ppm by mass or less.

Steel Microstructure

First, the area fraction of each microstructure in a base steel sheet according to the present invention will be described. The area fraction of each microstructure refers to the area fraction of each constituent phase to the entire observed area. The area fraction of each microstructure can be determined from image data obtained by polishing a cross section of a steel sheet parallel to the rolling direction, then corroding the cross section with a nital solution, and photographing the cross section with a scanning electron microscope (SEM) at a magnification of 1500 times. The measurement regions are a region from the surface to 1/8 of the sheet thickness and a region from 1/8 to 3/8 of the sheet thickness.

In the image data, ferrite can be distinguished as black, bainite as black including island-like retained austenite or as gray including carbides with the same orientation, tempered martensite as light gray including fine carbides with random orientations, and retained austenite as white. Here, since both as-quenched martensite and retained austenite exhibit white color, it may be difficult to distinguish them in a SEM image. Thus, the area fraction of retained austenite is individually determined by measuring the X-ray diffraction intensity, and the area fraction of as-quenched martensite is determined by subtracting the area fraction of retained austenite from the area fraction of the white portion described above. The area fraction of retained austenite is determined from the ratio of the integrated X-ray diffraction intensity of (200), (220), and (311) planes of fcc iron to the integrated X-ray diffraction intensity of (200), (211), and (220) planes of bcc iron on a plane at a quarter thickness. Retained austenite is calculated as a volume fraction by the above measurement, and assuming that the retained austenite is three-dimensionally homogeneous, the volume fraction of the retained austenite is defined as the area fraction of the retained austenite.

Martensite defined in the present invention includes both as-quenched martensite and tempered martensite and may be composed of as-quenched martensite and tempered martensite.

Area fraction of ferrite: less than 50%

The presence of ferrite is advantageous for improving ductility but is disadvantageous for achieving a high TS and a high yield ratio. When the area fraction of ferrite is 50% or more, a TS of 980 MPa or more may not be achieved. Thus, the area fraction of ferrite is less than 50%, preferably less than 45%.

The lower limit is not particularly limited, and the area fraction of ferrite may be 0%, preferably 1% or more, more preferably 2% or more.

Total area fraction of martensite and bainite: 50% or more

Martensite is a hard microstructure formed from austenite at a low temperature equal to or lower than the martensite transformation starting point (Ms temperature). Martensite in the present invention includes not only martensite as quenched (as-quenched martensite) but also tempered martensite produced by tempering the formed martensite at a predetermined temperature.

Bainite is formed from austenite at a relatively low temperature equal to or higher than the Ms temperature and is a hard microstructure in which fine carbides are dispersed in needle-like or plate-like ferrite. Martensite and bainite are microstructures responsible for the strength of a steel sheet according to the present invention, and when the total area fraction is less than 50%, a TS of 980 MPa or more may not be achieved. Thus, the total area fraction of martensite and bainite is 50% or more, preferably 55% or more.

The total area fraction of martensite and bainite may be 100%, or only one of them may be within the above range.

Area fraction of retained austenite: 10% or less

Retained austenite may transform into hard martensite during bending and may promote crack initiation, and this effect becomes significant when the retained austenite constitutes more than 10%. Thus, the area fraction of retained austenite is 10% or less, preferably 5% or less. Retained austenite may constitute 0%.

As long as ferrite, martensite, bainite, and retained austenite satisfy the above-described ranges, the remainder of the microstructure may include 5% or less by area of another microstructure. The other microstructure may be pearlite or the like.

75% or more by area of martensite: tempered martensite containing carbide with average grain size of 50 nm or more and 200 nm or less

In the present invention, a high yield ratio due to precipitation strengthening can be achieved by controlling the area fraction of tempered martensite containing carbide of a predetermined size to be 75% or more of the total martensite contained in the microstructure. At the same time, high hydrogen embrittlement resistance can be achieved by utilizing fine carbides as hydrogen trap sites in the steel to reduce the amount of diffusible hydrogen. To sufficiently produce these effects, the area fraction of tempered martensite in the entire martensite is 75% or more, preferably 80% or more, and may be 100%. These effects can be produced when the carbide has an average grain size of 50 nm or more and 200 nm or less. In general, when a precipitate has a constant volume fraction, a precipitate with a smaller grain size is more advantageous for precipitation strengthening. Furthermore, from the perspective of hydrogen trapping, carbide with a larger surface area is more advantageous and therefore, if the volume fraction is constant, carbide with a smaller grain size is more preferred. Furthermore, coarse carbide causes deterioration of bendability. Thus, the carbide has an average grain size of 200 nm or less.

On the other hand, carbide with a grain size of less than 50 nm may have a lower volume fraction and may not sufficiently have the effects of precipitation strengthening and hydrogen trapping necessary for the present invention. Thus, the carbide has an average grain size of 50 nm or more.

Here, the average grain size is an average value of a major axis length and a minor axis length when the grain is approximated to an ellipse. The average grain size can be measured, for example, by a method described in Examples.

Ratio TM1/TM2 of area fraction TM1 of tempered martensite to entire microstructure in region from surface to 1/8 of sheet thickness to area fraction TM2 of tempered martensite to entire microstructure in region from 1/8 to 3/8 of sheet thickness: 0.70 or more

In a galvanized steel sheet according to the present invention, the ratio TM1/TM2 of the area fraction TM1 of tempered martensite to the entire microstructure in the region from the steel sheet surface to 1/8 of the sheet thickness (hereinafter also referred to as a steel sheet surface layer portion) to the area fraction TM2 (% by volume) of the tempered martensite to the entire microstructure in the region from 1/8 to 3/8 of the sheet thickness needs to be 0.70 or more. TM1/TM2 of less than 0.70 may result in an insufficient effect of the carbide in the steel sheet surface layer portion, and both a high yield ratio and high bendability may not be achieved.

Thus, TM1/TM2 is 0.70 or more. TM1/TM2 is preferably 0.72 or more, more preferably 0.75 or more.

The upper limit may be, but is not limited to, 1.00.

The term "surface (steel sheet surface)", as used herein, refers to the surface of a base steel sheet (steel substrate, underlying steel sheet) under a galvanized layer.

For TM1 and TM2, a cross section of the steel sheet in the thickness direction parallel to the rolling direction is polished and then corroded with a nital solution, and the microstructures of three or more visual fields are photographed with a SEM at a magnification of 1500 times in a region from the surface to 1/8 of the sheet thickness and a region from 1/8 to 3/8 of the sheet thickness. TM1/TM2 is calculated from the area fraction of the resulting tempered martensite.

Integrated amount of hydrogen released when base steel sheet from which galvanized layer is peeled off is heated from room temperature to 200°C: 0.45 ppm by mass or less

A galvanized steel sheet according to the present invention has high bendability and hydrogen embrittlement resistance because the amount of diffusible hydrogen is reduced by controlling the amount of carbide in martensite within the specified range and thereby effectively trapping hydrogen introduced into the steel during the production process.

In the present invention, the integrated amount of hydrogen released when a base steel sheet from which a coated layer is peeled off is heated from room temperature (15°C to 35°C) to 200°C at 200°C/h is defined as the amount of diffusible hydrogen in the steel.

When the amount of diffusible hydrogen is more than 0.45 ppm by mass, high bendability and hydrogen embrittlement resistance may not be achieved. Thus, the amount of diffusible hydrogen is 0.45 ppm by mass or less, preferably 0.40 ppm by mass or less.

The lower limit may be, but is not limited to, 0 ppm by mass because the amount of diffusible hydrogen is preferably as small as possible.

When base steel sheet from which galvanized layer is peeled off is heated from room temperature to 600°C, integrated amount of hydrogen released in temperature range of 350°C to 600°C: 0.05 ppm by mass or more (suitable conditions)

A galvanized steel sheet according to the present invention is designed to reduce the amount of diffusible hydrogen by controlling the amount of carbide in martensite within the specified range and thereby effectively trapping hydrogen introduced into the steel during the production process. Hydrogen trapped in carbide is less likely to be released from the steel than diffusible hydrogen and is not released by heating to 200°C but is released at 350°C or more. To sufficiently achieve the advantages of the present invention, when a steel sheet from which a coated layer is peeled off is heated from room temperature (15°C to 35°C) to 600°C at 200°C/h, the integrated amount of hydrogen (the amount of trapped hydrogen) released at 350°C to 600°C is preferably 0.05 ppm by mass or more, more preferably 0.07 ppm by mass or more.

Although the upper limit is not particularly limited, the integrated amount of hydrogen released at 350°C to 600°C may be 1.00 ppm by mass or less.

As a method for determining the amount of hydrogen in the steel described above, an approximately 5 x 30 mm test specimen for hydrogen analysis is taken from a galvanized steel sheet, the galvanized layer on the surface is removed with a precision grinder, the test specimen is immediately put into a quartz tube whose atmosphere is replaced with Ar gas, the test specimen is heated to 600°C at a heating rate of 200°C/h, and the amount of hydrogen released during heating is measured by gas chromatography. The integrated amount of hydrogen released in the temperature range of room temperature to 200°C is determined as the "amount of diffusible hydrogen", and the integrated amount of hydrogen released in the temperature range of 350°C or more and 600°C or less is determined as the "amount of trapped hydrogen".

The amount of hydrogen is preferably measured after completion of the production of a steel sheet. That is, the amount of diffusible hydrogen is preferably measured after completion of the production of a steel sheet. The amount of trapped hydrogen is preferably measured after completion of the production of a steel sheet.

The amount of diffusible hydrogen and the amount of trapped hydrogen are more preferably measured within 72 hours after a steel sheet reaches room temperatures (40°C or less) for the first time after the reheating step specified in the present invention.

Galvanized Layer

A galvanized steel sheet according to the present invention has a galvanized layer on a surface of a base steel sheet, and the galvanized layer may be a galvannealed layer, a hot-dip galvanized layer, or a hot-dip galvannealed layer. The galvanized layer may be provided on one or both surfaces of the base steel sheet.

The term "galvanized layer", as used herein, refers to a coated layer containing Zn as a main component (Zn content: 50.0% or more), for example, a galvanized layer, such as a hot-dip galvanized layer, or a galvannealed layer, such as a hot-dip galvannealed layer.

Here, the hot-dip galvanized layer (galvanized layer) is preferably composed of, for example, Zn, 20.0% or less by mass of Fe, and 0.001% or more by mass and 1.0% or less by mass of Al. The hot-dip galvanized layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% or more by mass and 3.5% or less by mass. The Fe content of the hot-dip galvanized layer is more preferably less than 7.0% by mass. The remainder other than the above elements is incidental impurities.

The hot-dip galvannealed layer (galvannealed layer) is preferably composed of, for example, 20% or less by mass of Fe and 0.001% or more by mass and 1.0% or less by mass of Al. The hot-dip galvannealed layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% or more by mass and 3.5% or less by mass. The Fe content of the hot-dip galvannealed layer is more preferably 7.0% or more by mass, still more preferably 8.0% or more by mass. The Fe content of the hot-dip galvannealed layer is more preferably 15.0% or less by mass, still more preferably 13.0% or less by mass. The remainder other than the above elements is incidental impurities.

Furthermore, the coating weight per side of the galvanized layer is preferably, but not limited to, 20 g/m$^2$ or more. The coating weight per side of the galvanized layer is preferably 80 g/m$^2$ or less.

The coating weight of the galvanized layer is measured as described below.

That is, a treatment liquid is prepared by adding 0.6 g of a corrosion inhibitor for Fe ("Ibit 700BK" (registered trademark) manufactured by Asahi Chemical Co., Ltd.) to 1 L of 10% by mass aqueous hydrochloric acid. A steel sheet as a sample is then immersed in the treatment liquid to dissolve a galvanized layer. The mass loss of the sample due to the dissolution is then measured and is divided by the surface area of a base steel sheet (the surface area of a coated portion) to calculate the coating weight (g/m2).

Chemical Composition

Next, a preferred chemical composition of a steel sheet constituting a galvanized steel sheet (a base steel sheet (hereinafter also referred to simply as a steel sheet)) will be described. Unless otherwise specified, "%" representing the component element content refers to "% by mass".

C: 0.080% or more and 0.300% or less

C improves hardenability and facilitates the formation of martensite or bainite. C can also precipitate as fine carbide in the microstructure and thereby trap hydrogen in the steel, reduce the amount of diffusible hydrogen, and improve the bendability. A C content of less than 0.080% cannot satisfy all of TS ≥ 980 MPa, yield ratio: 0.60 or more, and high bendability. Thus, the C content is preferably 0.080% or more, more preferably 0.100% or more.

On the other hand, a C content of more than 0.300% may result in a saturated hydrogen trapping effect of fine carbide and martensite with excessively increased strength, which may impair bendability. Thus, the C content is preferably 0.300% or less, more preferably 0.250% or less.

Si: 0.01% or more and 2.00% or less

Si is an element effective in strengthening ferrite, which has high ductility, and contributes to improving the balance between strength and ductility. This effect cannot be produced at a Si content of less than 0.01%. Thus, the Si content is preferably 0.01% or more, more preferably 0.1% or more.

On the other hand, Si is also an element that suppresses the formation of carbide. A Si content of more than 2.00% may result in the suppressed formation of carbide necessary for the present invention and low bendability. Thus, the Si content is preferably 2.00% or less, more preferably 1.50% or less.

Mn: 1.00% or more and 4.00% or less

Mn improves the hardenability of steel and facilitates the formation of martensite or bainite. When the Mn content is less than 1.00%, the area fraction of ferrite may become excessive, and required strength and yield ratio may not be achieved. Thus, the Mn content is preferably 1.00% or more, more preferably 1.50% or more.

On the other hand, when the Mn content is more than 4.00%, the strength of martensite may increase excessively, and the formation of coarse MnS may be promoted, so that high bendability may not be achieved. Thus, the Mn content is preferably 4.00% or less, more preferably 3.50% or less.

P: 0.10% or less

An excessively large amount of P segregates at a prior-austenite grain boundary and embrittles the grain boundary, causing deterioration of bendability. Thus, the P content is preferably 0.10% or less, more preferably 0.05% or less. The P content is preferably 0.03% or less, preferably 0.02% or less.

Although the lower limit is not particularly limited, P is also an element effective in increasing the strength of a steel sheet by solid-solution strengthening, and the P content is preferably 0.001% or more to produce such an effect. The P content may be 0.002% or more or 0.005% or more.

S: 0.0200% or less

S forms an inclusion, such as MnS, and causes deterioration of bendability. Thus, the S content is preferably 0.0200% or less, more preferably 0.0100% or less.

Although the lower limit is not particularly limited, the S content may be 0.0001% or more due to constraints on production technology. The S content may be 0.0002% or more or 0.0004% or more.

Al: 0.003% or more and 0.100% or less

Al is used as a deoxidizing agent and also contributes to solid-solution strengthening of steel. These effects may not be produced at an Al content of less than 0.003%. Thus, the Al content is preferably 0.003% or more. The Al content is preferably 0.005% or more, preferably 0.007% or more.

On the other hand, an Al content of more than 0.100% results in deterioration of slab quality during steelmaking. Thus, the Al content is preferably 0.100% or less, more preferably 0.050% or less.

N: 0.0100% or less

N may form coarse nitride, act as a starting point of void formation, and reduce bendability. A N content of 0.0100% or less can prevent N from forming coarse nitride. Thus, the N content is preferably 0.0100% or less, more preferably 0.0060% or less.

Although the lower limit is not particularly limited, the N content may be 0.0005% or more due to constraints on production technology.

The remainder other than the above is composed of Fe and incidental impurities. A steel sheet according to the present invention preferably has a chemical composition containing the above components, with the remainder being Fe and incidental impurities.

The chemical composition may further optionally contain a predetermined amount of at least one selected from the following element group. When the following optional elements are contained in an amount less than an appropriate lower limit, the optional elements may be contained as incidental impurities.

B: 0.0100% or less

B is an element effective in improving the hardenability of steel. To improve the hardenability, the B content is preferably 0.0001% or more, more preferably 0.0002% or more, still more preferably 0.0003% or more. The B content is more preferably 0.0005% or more. The B content is still more preferably 0.0007% or more. To achieve higher formability, if B is contained, the B content is preferably 0.0100% or less, more preferably 0.0050% or less, still more preferably 0.0030% or less.

Ti: 0.200% or less

Ti precipitates fine carbide and contributes to an increase in strength and a hydrogen trapping effect. The lower limit of the Ti content is not particularly limited and, to produce these effects, is preferably 0.001% or more, more preferably 0.005% or more, still more preferably 0.010% or more.
On the other hand, an excessively high Ti content may result in coarse carbide and deterioration of bendability. Thus, if Ti is contained, the Ti content is preferably 0.200% or less, more preferably 0.100% or less, still more preferably 0.060% or less.

Nb: 0.200% or less

Nb precipitates fine carbide and contributes to an increase in strength and a hydrogen trapping effect. The lower limit of the Nb content is not particularly limited and, to produce these effects, is preferably 0.001% or more, more preferably 0.005% or more, still more preferably 0.010% or more.
On the other hand, an excessively high Nb content may result in coarse carbide and deterioration of bendability. Thus, if Nb is contained, the Nb content is preferably 0.200% or less, more preferably 0.100% or less, still more preferably 0.060% or less.

Sb: 0.200% or less

Sb is an element effective in suppressing excessive decarburization of a steel sheet surface and preventing a decrease in the amount of martensite formed.
To produce such an effect, the Sb content is preferably 0.001% or more, more preferably 0.002% or more, still more preferably 0.005% or more.
On the other hand, to achieve higher toughness, if Sb is contained, the Sb content is preferably 0.200% or less. The Sb content is more preferably 0.060% or less, still more preferably 0.020% or less.

Sn: 0.200% or less

Sn is an element effective in suppressing decarburization, denitrification, or the like and thereby reducing a decrease in the strength of steel. To produce such an effect, the Sn content is preferably 0.001% or more, more preferably 0.002% or more, still more preferably 0.005% or more.
On the other hand, to achieve higher impact resistance, if Sn is contained, the Sn content is preferably 0.200% or less. The Sn content is more preferably 0.060% or less, still more preferably 0.020% or less.

V: 0.100% or less

V precipitates fine carbide and contributes to an increase in strength and a hydrogen trapping effect. The lower limit of the V content is not particularly limited and, to produce these effects, is preferably 0.001% or more, more preferably 0.002% or more, still more preferably 0.005% or more. The V content is preferably 0.007% or more, preferably 0.009% or more.
On the other hand, an excessively high V content may result in coarse carbide and deterioration of bendability. Thus, if V is contained, the V content is preferably 0.100% or less, more preferably 0.080% or less, still more preferably 0.060% or less.

Cu: 2.00% or less

Cu is an element that increases the hardenability and is an element effective in setting the area fraction of the hard phase within a more suitable range. To produce this effect, the Cu content is preferably 0.005% or more, more preferably 0.010% or more, still more preferably 0.020% or more. The Cu content is preferably 0.040% or more, preferably 0.060% or more.

Furthermore, if Cu is contained, from the perspective of preventing an increase in cost, the Cu content is preferably 2.00% or less, more preferably 1.00% or less, still more preferably 0.50% or less.

Cr: 2.00% or less

The addition of Cr can improve the hardenability and the balance between the strength and the ductility. To produce this effect, the Cr content is preferably 0.001% or more, more preferably 0.002% or more, still more preferably 0.005% or more. The Cr content is preferably 0.007% or more, preferably 0.009% or more.

If Cr is contained, from the perspective of preventing an increase in cost, the Cr content is preferably 2.00% or less, more preferably 1.00% or less, still more preferably 0.80% or less.

Ni: 2.00% or less

The addition of Ni can improve the hardenability and the balance between the strength and the ductility. To produce this effect, the Ni content is preferably 0.005% or more, more preferably 0.010% or more, still more preferably 0.020% or more. The Ni content is preferably 0.030% or more, preferably 0.040% or more.

If Ni is contained, from the perspective of preventing an increase in cost, the Ni content is preferably 2.00% or less, more preferably 1.00% or less, still more preferably 0.80% or less. The Ni content is preferably 0.60% or less, preferably 0.40% or less.

Mo: 1.00% or less

The addition of Mo can have a strength adjustment effect. To produce this effect, the Mo content is preferably 0.005% or more, more preferably 0.01% or more, still more preferably 0.02% or more. The Mo content is preferably 0.03% or more, preferably 0.04% or more.

If Mo is contained, from the perspective of preventing an increase in cost, the Mo content is preferably 1.00% or less, more preferably 0.80% or less, still more preferably 0.60% or less. The Mo content is preferably 0.50% or less, preferably 0.40% or less.

Ta: 0.100% or less

The addition of Ta can have the effect of improving the strength. To produce this effect, the Ta content is preferably 0.001% or more, more preferably 0.002% or more, still more preferably 0.003% or more.

If Ta is contained, from the perspective of preventing an increase in cost, the Ta content is preferably 0.100% or less. The Ta content is more preferably 0.050% or less, still more preferably 0.020% or less. The Ta content is preferably 0.010% or less, preferably 0.008% or less.

W: 0.500% or less

The addition of W can have the effect of improving the strength. To produce this effect, the W content is preferably 0.001% or more, more preferably 0.002% or more, still more preferably 0.003% or more. The W content is preferably 0.005% or more, preferably 0.007% or more.

If W is contained, from the perspective of preventing an increase in cost, the W content is preferably 0.500% or less, more preferably 0.450% or less, still more preferably 0.400% or less. The W content is preferably 0.350% or less, preferably 0.300% or less.

Zr: 0.020% or less

The addition of Zr can have the effect of improving the ultimate deformability and the stretch flangeability of a steel sheet. To produce this effect, the Zr content is preferably 0.0005% or more, more preferably 0.0010% or more, still more preferably 0.0015% or more. If Zr is contained, from the perspective of preventing an increase in cost, the Zr content is preferably 0.020% or less. The Zr content is more preferably 0.010% or less, still more preferably 0.0050% or less.

Ca: 0.0200% or less

When Ca is contained, the form of sulfide can be controlled, and the ductility and toughness can be further improved. To achieve higher ductility, if Ca is contained, the Ca content is preferably 0.0200% or less. The Ca content is more preferably 0.0100% or less, still more preferably 0.0050% or less. The Ca content is preferably 0.0040% or less, preferably 0.0030% or less.

Although the lower limit of the Ca content may be, but is not limited to, 0.0000%, the Ca content is preferably 0.0001% or more due to constraints on production technology. Furthermore, from the perspective of controlling the form of sulfide and further improving the ductility and toughness, the Ca content is more preferably 0.0005% or more.

Mg: 0.0200% or less

0.0001% or more of Mg can control the form of sulfide and improve the ductility and toughness. It is more preferably 0.0005% or more, still more preferably 0.001% or more.

To achieve higher ductility, if Mg is contained, the Mg content is preferably 0.0200% or less. The Mg content is more preferably 0.0100% or less, still more preferably 0.0050% or less.

Zn: 0.020% or less

The addition of Zn can have the effect of improving the ultimate deformability and the stretch flangeability of a steel sheet. To produce this effect, the Zn content is preferably 0.001% or more, more preferably 0.002% or more, still more preferably 0.003% or more.

If Zn is contained, from the perspective of preventing an increase in cost, the Zn content is preferably 0.020% or less. The Zn content is more preferably 0.010% or less, still more preferably 0.008% or less.

Co: 0.020% or less

The addition of Co can have the effect of improving the ultimate deformability and the stretch flangeability of a steel sheet. To produce this effect, the Co content is preferably 0.001% or more, more preferably 0.002% or more, still more preferably 0.003% or more. If Co is contained, from the perspective of preventing an increase in cost, the Co content is preferably 0.020% or less. The Co content is more preferably 0.010% or less, still more preferably 0.008% or less.

Ce, Se, Te, Ge, As, Sr, Cs, Hf, Pb, Bi, or REM (excluding Ce) content: 0.0200% or less

The addition of these elements can have the effect of improving the ultimate deformability and the stretch flangeability of a steel sheet. To produce this effect, at least one of these elements is contained in an amount of 0.0001% or more.

On the other hand, from the perspective of preventing an increase in cost, if at least one of these elements is contained, each element content is preferably 0.0200% or less.

Ce is more preferably 0.0002% or more, still more preferably 0.0005% or more. Ce is more preferably 0.0150% or less, still more preferably 0.0100% or less. Ce is preferably 0.0080% or less, more preferably 0.0060% or less.

Se is more preferably 0.0002% or more, still more preferably 0.0005% or more. Se is preferably 0.0007% or more, more preferably 0.0009% or more. Se is more preferably 0.0150% or less, still more preferably 0.0100% or less. Se is preferably 0.0080% or less, more preferably 0.0060% or less.

Te is more preferably 0.0002% or more, still more preferably 0.0005% or more. Te is preferably 0.0007% or more, more preferably 0.0009% or more. Te is more preferably 0.0150% or less, still more preferably 0.0100% or less.

Ge is more preferably 0.0002% or more, still more preferably 0.0005% or more. Ge is preferably 0.0007% or more, more preferably 0.0009% or more. Ge is more preferably 0.0150% or less, still more preferably 0.0100% or less.

As is more preferably 0.0002% or more, still more preferably 0.0005% or more. As is preferably 0.0007% or more, more preferably 0.0009% or more. As is more preferably 0.0150% or less, still more preferably 0.0100% or less.

Sr is more preferably 0.0002% or more, still more preferably 0.0005% or more. Sr is preferably 0.0007% or more, more preferably 0.0009% or more. Sr is more preferably 0.0150% or less, still more preferably 0.0100% or less.

Cs is more preferably 0.0002% or more, still more preferably 0.0005% or more. Cs is preferably 0.0007% or more, more preferably 0.0009% or more. Cs is more preferably 0.0150% or less, still more preferably 0.0100% or less.

Hf is more preferably 0.0002% or more, still more preferably 0.0005% or more. Hf is preferably 0.0007% or more, more preferably 0.0009% or more. Hf is more preferably 0.0150% or less, still more preferably 0.0100% or less.

Pb is more preferably 0.0002% or more, still more preferably 0.0005% or more. Pb is preferably 0.0007% or more, more preferably 0.0009% or more. Pb is more preferably 0.0150% or less, still more preferably 0.0100% or less. Pb is preferably 0.0080% or less, more preferably 0.0060% or less.

Bi is more preferably 0.0002% or more, still more preferably 0.0005% or more. Bi is preferably 0.0007% or more, more preferably 0.0009% or more. Bi is more preferably 0.0150% or less, still more preferably 0.0100% or less. Bi is preferably 0.0080% or less, more preferably 0.0060% or less.

REM is more preferably 0.0002% or more, still more preferably 0.0005% or more. REM is preferably 0.0007% or more, more preferably 0.0009% or more. REM is more preferably 0.0150% or less, still more preferably 0.0100% or less. The REM specified in the present invention excludes Ce described above.

The term "REM", as used herein, refers to scandium (Sc) with an atomic number of 21, yttrium (Y) with an atomic number of 39, and lanthanoids from lanthanum (La) with an atomic number of 57 to lutetium (Lu) with an atomic number of 71. The term "REM concentration", as used herein, refers to the total content of one or two or more elements selected from the REM.

The REM is preferably, but not limited to, Sc, Y, or La.

<Method for Manufacturing Galvanized Steel Sheet>

Next, a method for manufacturing a galvanized steel sheet according to an embodiment of the present disclosure will be described. Unless otherwise specified, the temperature at which a steel slab (steel material), a steel sheet, or the like described below is heated or cooled refers to the surface temperature of the steel slab (steel material), the steel sheet, or the like.

A method for manufacturing a galvanized steel sheet according to the present invention includes: a hot rolling step of heating a slab with the above-described chemical composition to the temperature range of 1100°C to 1350°C, hot-rolling the slab at a finish rolling delivery temperature of 800°C to 950°C, and coiling the hot-rolled slab at a coiling temperature of 650°C or less; an oxidation step of heating a steel sheet after the hot rolling step to 600°C or more in an oxidizing atmosphere with an oxygen concentration of 1000 ppm by volume or more and 30000 ppm by volume or less; a reduction step of holding the steel sheet after the oxidation step at 700°C or more for 20 seconds or more in a reducing atmosphere with a dew point of -20°C or less and a hydrogen concentration of 8% or more by volume and 30% or less by volume; a soaking step of holding the steel sheet after the reduction step at 750°C or more for 20 seconds or more and 300 seconds or less in a soaking atmosphere with a dew point of -20°C or less and a hydrogen concentration of 0.2% or more by volume and 8% or less by volume; a first cooling step of cooling the steel sheet after the soaking step; a galvanization step of forming a galvanized layer on a surface of the steel sheet after the first cooling step; a second cooling step of cooling the steel sheet after the coating step to a cooling stop temperature of 100°C or less at an average cooling rate of 20°C/s or less from a temperature range of 350°C or more and 450°C or less down to (Ms temperature - 100°C) while the steel sheet is retained in a temperature range of 100°C to 200°C for 5 seconds or more; and a reheating step of holding the steel sheet after the second cooling step in a temperature range of 100°C to 450°C for 5 to 600 seconds.

[Hot Rolling Step]

The slab is hot-rolled under the following conditions.

Slab heating temperature: 1100°C to 1350°C

To dissolve carbide and reduce rolling force, the slab heating temperature is 1100°C or more. The slab heating temperature is preferably 1150°C or more. To prevent an increase in scale loss, the slab heating temperature is 1350°C or less, preferably 1300°C or less.

Finish rolling delivery temperature: 800°C to 950°C

When the finish rolling delivery temperature is less than 800°C, ferrite transformation may occur at the time of rolling, and extended ferrite may be formed in the surface layer of the hot-rolled sheet and remain even in the next and subsequent steps, which may impair the final bendability. Thus, the finish rolling delivery temperature is 800°C or more, preferably 850°C or more. On the other hand, a finish rolling delivery temperature of more than 950°C may result in a coarse crystal grain and insufficient strength or deterioration of bendability. Thus, the finish rolling delivery temperature is 950°C or less, preferably 930°C or less.

Coiling temperature: 650°C or less

When the coiling temperature is more than 650°C, carbide in a hot-rolled steel sheet may become coarsened and may not be completely dissolved before the soaking step, which may cause deterioration of bendability. Thus, the coiling temperature is 650°C or less, preferably 600°C or less. The lower limit of the coiling temperature is preferably, but not limited to, 400°C or more from the perspective of suppressing the occurrence of a shape defect in a steel sheet and preventing the steel sheet from becoming excessively hard.

[Cold Rolling Step (Suitable Conditions) ]

Before a steel sheet after the hot rolling step (hot rolling process) is subjected to the oxidation step, cold rolling may be performed as necessary. In the case of performing cold rolling, a hot-rolled steel sheet formed after the hot rolling step (hot rolling process) is preferably cold-rolled under the following conditions after being subjected to a preliminary treatment, such as pickling or degreasing, by a known method.

Rolling reduction of 20% or more

In the case of performing cold rolling, although the rolling reduction (cumulative rolling reduction ratio) is not particularly limited, when the rolling reduction (cumulative rolling reduction ratio) of cold rolling is less than 20%, recrystallization of ferrite may not be promoted, unrecrystallized ferrite may remain, and a steel microstructure of the present invention may not be achieved. Thus, the rolling reduction (cumulative rolling reduction ratio) in the cold rolling step is preferably 20% or more, more preferably 30% or more. The rolling reduction may have any upper limit and is preferably 80% or less.

[Oxidation Step]

The oxidation step is a step necessary to improve the wettability of a steel sheet at the time of immersion in hot-dip galvanizing or the like in the galvanization step and to achieve a good appearance. The oxidation treatment in the oxidation step can form an iron oxide layer on the steel sheet surface, form a reduced iron layer during the subsequent annealing in a reducing atmosphere, and improve the wettability of the steel sheet.

Oxygen concentration: 1000 ppm by volume or more and 30000 ppm by volume or less

To form an iron oxide layer required in the oxidation step, it is necessary to set the oxygen concentration in the oxidizing atmosphere to a predetermined range. An oxygen concentration of less than 1000 ppm by volume may result in insufficient formation of an iron oxide layer. Thus, the oxygen concentration is 1000 ppm by volume or more, preferably 1500 ppm by volume or more. On the other hand, when the oxygen concentration is more than 30000 ppm by volume, iron oxide may be excessively formed, the reduction may not be completed before the galvanization step, such as immersion in hot-dip galvanizing, and the coating wettability may rather deteriorate due to the remaining iron oxide. Thus, the oxygen concentration is 30000 ppm by volume or less, preferably 25000 ppm by volume or less. The oxygen concentration is preferably 22000 ppm by volume or less, more preferably 20000 ppm by volume or less.

Steel sheet temperature (highest temperature reached in oxidation treatment): 600°C or more

A steel sheet temperature (the highest temperature reached in the oxidation treatment) of less than 600°C may result in a small amount of iron oxide formed on the surface, insufficient coating wettability in a hot-dip coating treatment or the like, and a poor appearance. Thus, the steel sheet temperature (the highest temperature reached in the oxidation treatment) is 600°C or more, preferably 620°C or more. The upper limit of the steel sheet temperature is preferably, but not limited to, 900°C or less, more preferably 880°C or less, to more suitably prevent unreduced iron oxide from remaining in the subsequent reduction step due to excessive oxidation of the steel sheet and to more consistently achieve high coatability. The steel sheet temperature in the oxidation step (the highest temperature reached in the oxidation treatment) is preferably 860°C or less, more preferably 840°C or less.

[Reduction Step]

Iron oxide on the surface produced in the oxidation step is heated in an iron reducing atmosphere to form a reduced iron layer. In the subsequent soaking step, the atmosphere has a relatively low hydrogen concentration, so that the iron reduction reaction rate decreases. Thus, it is necessary to complete the reduction of iron oxide in the reduction step.

Steel sheet temperature (highest temperature reached in reduction treatment): 700°C or more

A steel sheet temperature (the highest temperature reached in a reduction treatment) of less than 700°C may result in a low reduction rate and remaining unreduced iron oxide. Thus, the steel sheet temperature in the reduction step is 700°C or more, preferably 750°C or more. The upper limit of the steel sheet temperature is preferably, but not limited to, 950°C or less from the perspective of reducing the load on the furnace body. The steel sheet temperature in the reduction step is preferably 920°C or less, more preferably 900°C or less.

Holding time (holding time in reduction treatment): 20 seconds or more

A holding time in the reduction step (a holding time in the reduction treatment) of less than 20 seconds may result in incomplete reduction of iron oxide. Thus, the holding time in the reduction step is 20 seconds or more, preferably 25 seconds or more.

The upper limit of the holding time is preferably, but not limited to, 150 seconds or less from the perspective of productivity. The holding time is preferably 120 seconds or less, more preferably 100 seconds or less.

Hydrogen concentration (hydrogen concentration in reduction treatment): 8% or more by volume and 30% or less by volume

A hydrogen concentration in the atmosphere in the reduction step (the hydrogen concentration in the reduction treatment) of less than 8% by volume may result in remaining unreduced iron oxide. Thus, the hydrogen concentration in the reduction step is 8% or more by volume, preferably 10% or more by volume.

On the other hand, when the hydrogen concentration is more than 30% by volume, the reduction rate may be saturated, and hydrogen introduced into the steel may increase excessively, so that it may be difficult to sufficiently reduce the amount of hydrogen in the steel in the subsequent soaking step. Thus, the hydrogen concentration in the reduction step is 30% or less by volume, preferably 28% or less by volume. The hydrogen concentration is preferably 26% or less by volume, more preferably 24% or less by volume.

Dew point (dew point in reduction treatment): -20°C or less

When the dew point of the atmosphere in the reduction step is more than -20°C, a decarburization reaction on the steel sheet surface may be promoted, and a galvanized steel sheet according to the present invention may not be obtained. Thus, the dew point of the atmosphere in the reduction step (the dew point in the reduction treatment) is -20°C or less, preferably -25°C or less. The lower limit of the dew point is preferably, but not limited to, -50°C or more from the perspective of industrial controllability.

[Soaking Step]

In the soaking step, annealing is performed to form the microstructure of a steel sheet according to the present invention, and the amount of hydrogen introduced into the steel in the reduction step is reduced.

Steel sheet temperature (annealing temperature): 750°C or more

A steel sheet temperature in the soaking step (annealing temperature) of less than 750°C may result in reoxidation of the steel sheet surface. Furthermore, unrecrystallized ferrite may remain, or austenite may be insufficiently formed during annealing, so that the microstructure required for a galvanized steel sheet according to the present invention may not be formed. Thus, the steel sheet temperature is 750°C or more, preferably 760°C or more.

On the other hand, the upper limit of the steel sheet temperature in the soaking step is preferably, but not limited to, 950°C or less from the perspective of reducing the load on the furnace body and preventing excessive coarsening of austenite grains. The annealing temperature is preferably 930°C or less, more preferably 910°C or less.

Holding time (holding time in soaking treatment): 20 seconds or more and 300 seconds or less

A holding time of less than 20 seconds in the soaking step may result in an insufficient reduction in the amount of hydrogen in the steel. This may also result in insufficient formation of austenite, and a steel microstructure according to the present invention may not be formed. Thus, the holding time is 20 seconds or more, preferably 50 seconds or more.

On the other hand, a holding time of more than 300 seconds may result in coarse austenite grains and decarburization of the surface layer, so that a steel microstructure according to the present invention may not be formed. Thus, the holding time is 300 seconds or less, preferably 200 seconds or less. The holding time is preferably 180 seconds or less, more preferably 160 seconds or less.

Hydrogen concentration (hydrogen concentration in soaking treatment): 0.2% or more by volume and 8% or less by volume

Reduction of iron oxide is completed in the reduction step, and the atmosphere in the soaking step is set to have a low hydrogen concentration within a range in which the reduced iron is not reoxidized, thereby reducing the amount of hydrogen introduced into the steel in the reduction step. When the hydrogen concentration is more than 8% by volume, the amount of hydrogen in the steel cannot be sufficiently reduced, and a steel sheet according to the present invention cannot be manufactured. Thus, the hydrogen concentration is 8% or less by volume, preferably 5% or less by volume.

On the other hand, a hydrogen concentration of less than 0.2% by volume may result in reoxidation of reduced iron. Thus, the hydrogen concentration in the soaking atmosphere is 0.2% or more by volume, preferably 0.5% or more by volume. The hydrogen concentration is preferably 0.8% or more by volume, more preferably 1.0% or more by volume.

Dew point (dew point in soaking treatment): -20°C or less

When the dew point of the atmosphere in the reduction step is more than -20°C, a decarburization reaction on the steel sheet surface may be promoted, and a steel sheet according to the present invention may not be manufactured. Thus, the dew point of the atmosphere in the reduction step is -20°C or less, preferably -25°C or less. The lower limit of the dew point is preferably, but not limited to, -50°C or more from the perspective of industrial controllability.

[First Cooling Step]

A steel sheet after the soaking step is cooled to, for example, a temperature at which the steel sheet can be immersed in hot-dip galvanizing. The cooling conditions are preferably, but not limited to, the following conditions.
Hydrogen concentration (hydrogen concentration in first cooling treatment): 0.5% or more by volume and 30% or less by volume, dew point (dew point in first cooling treatment): 0°C or less (suitable conditions)
Reoxidation during cooling can be suppressed by setting the hydrogen concentration of the cooling atmosphere in the first cooling step to 0.5% or more by volume and the dew point to 0°C or less. More preferably, the hydrogen concentration is 1.0% or more by volume, and the dew point is -20°C or less.
The hydrogen concentration is preferably 1.5% or more by volume, more preferably 2.0% or more by volume.
The dew point is preferably -25°C or less, more preferably -30°C or less.
The dew point may also have any lower limit and is preferably -55°C or more, more preferably -50°C or more.
On the other hand, an increase in hydrogen in the steel due to hydrogen introduced during the cooling process can be suppressed by setting the hydrogen concentration to 30% or less by volume. The hydrogen concentration is more preferably 20% or less by volume, still more preferably 10% or less by volume.
Cooling from steel sheet temperature of 600°C to 900°C (steel sheet temperature in first cooling treatment) down to 150°C to 500°C at average cooling rate (average cooling rate in first cooling treatment) of 20°C/s or less (suitable conditions)
To more suitably prevent an increase in the amount of hydrogen in the steel during cooling, it is preferable to perform cooling from a steel sheet temperature of 600°C or more and 900°C or less at an average cooling rate of 20°C/s or less. The average cooling rate is preferably 10°C/s or more.
Furthermore, since it is necessary to lower the steel sheet temperature in the subsequent galvanization step to the temperature similar to the plating bath temperature, the cooling stop temperature (the cooling stop temperature in the first cooling) is 500°C or less. A cooling stop temperature of less than 150°C results in excessive martensite transformation before the galvanization step, and as a result of this being subjected to tempering after the galvanization step, the final microstructure sometimes has insufficient strength, so that the cooling stop temperature is 150°C or more.
The average cooling rate (°C/s) is determined by (steel sheet temperature (600°C to 900°C) - cooling stop temperature (150°C to 500°C))/cooling time (s) from start of cooling to stop of cooling.

[Galvanization Step]

A galvanized layer is formed on the surface of a steel sheet after the first cooling step. A typical method is a method of immersing a steel sheet in a hot-dip galvanizing bath.
Immersion in a hot-dip galvanizing bath will be described below as an example.
The conditions for immersion in a hot-dip galvanizing bath are not particularly limited, and the immersion may be performed by a general method. The hot-dip galvanizing bath is composed of Al, Zn, and incidental impurities, and the composition thereof is not particularly limited, but in one example, the Al concentration in the bath may be 0.05% or more by mass and 0.190% or less by mass. When the Al concentration in the bath is 0.05% or more by mass, the formation of bottom dross can be more suitably prevented. When the Al concentration in the bath is 0.190% or less by mass, the formation of top dross can be more suitably prevented. Also from the perspective of cost, the Al concentration in the bath is preferably 0.190% or less by mass. The temperature of the plating bath may be, but is not limited to, 440°C or more and 500°C or less. The galvanization applied in the present invention is not limited to the above-described hot-dip galvanizing as long as the desired steel sheet temperature is satisfied in the preceding and subsequent steps, and electrogalvanizing, zinc-based electroplating, or another method may also be used.
The coating weight per side is, in one example, but not limited to, 25 g/m$^2$ or more and 120 g/m$^2$ or less. A coating weight per side of 25 g/m$^2$ or more results in particularly high corrosion resistance and particularly easy control of the coating weight. A coating weight per side of 120 g/m$^2$ or less results in particularly high adhesiveness of coating. The coating weight may be adjusted by any method; for hot-dip galvanizing, for example, the coating weight can be adjusted using gas wiping through the gas pressure and the distance between the wiping nozzle and the steel sheet.

In the galvanization step, after the galvanized layer is formed, alloying treatment may be performed to manufacture a galvannealed steel sheet. When the galvanized layer is a galvannealed layer, desorption of hydrogen in the steel in the subsequent reheating step can be further promoted. The conditions for the alloying treatment are not particularly limited as long as a desired degree of alloying is achieved. For example, the alloying treatment in hot-dip galvanizing is preferably performed by holding at a predetermined steel sheet temperature for a predetermined time. For example, the steel sheet temperature may be 440°C or more. The steel sheet temperature may be 600°C or less. The holding time may be 5 seconds or more. The holding time may be 60 seconds or less.

For the alloying treatment, the Fe content (degree of alloying) of the coated layer is preferably 7% or more by mass. The Fe content (degree of alloying) is preferably 15% or less by mass. By setting the degree of alloying to 7% or more by mass, an η-Zn phase does not remain in the galvannealed layer, and the amount of hydrogen in the steel can be more suitably reduced in the reheating step. A degree of alloying of more than 15% by mass may result in promoted formation of a Γ phase at the interface between the galvannealed layer and a base material steel sheet and a decrease in the adhesiveness of coating, so that the degree of alloying is preferably 15% or less by mass.

[Second Cooling Step]

A steel sheet after the galvanization step is cooled to a cooling stop temperature of 100°C or less. The cooling method is not particularly limited as long as the following cooling conditions are satisfied, for example, $N_2$ gas cooling, water cooling, or a combination thereof.

Cooling stop temperature (cooling stop temperature in second cooling treatment): 100°C or less

In the second cooling step, non-transformed austenite is cooled to a temperature region lower than the Ms temperature to form martensite. The hydrogen diffusion rate is higher in martensite, which has a BCT crystal structure, than in austenite, which has an FCC crystal structure, and the reduction in the amount of hydrogen in the subsequent reheating step can be promoted. As described above, in a steel sheet according to the present invention, control should be performed so that 75% or more by area of the entire martensite in the microstructure is tempered martensite containing carbide of a predetermined size, and this cannot be satisfied at a cooling stop temperature of more than 100°C. Thus, the cooling stop temperature is 100°C or less, preferably 80°C or less. As described above, a steel sheet according to the present invention may have a retained austenite content of 0%, and all the non-transformed austenite may therefore be transformed into martensite at this time. Thus, the cooling stop temperature may have any lower limit and is, from the perspective of industrial practicability, for example, 0°C or more.

Average cooling rate from temperature range of 350°C to 450°C down to (Ms temperature - 100°C) (average cooling rate in second cooling treatment): 20°C/s or less

In the second cooling step, the steel sheet is preferably cooled so as to stay in the temperature range of Ms or lower and the cooling stop temperature or higher for a predetermined time. Thus, martensite formed immediately below the Ms temperature is self-tempered during cooling, and the formation of carbide in the martensite required for the present invention can be further promoted. An average cooling rate of more than 20°C/s results in insufficient self-tempering and insufficient formation of the carbide. Thus, the average cooling rate is 20°C/s or less, preferably 10°C/s or less, more preferably 5°C/s or less.

The lower limit of the0 cooling rate is preferably, but not limited to, 1°C/s or more from the perspective of more consistently preventing the size of the carbide (the average grain size of carbide contained in martensite) from exceeding 200 nm due to excessive slow cooling.

The average cooling rate (°C/s) is determined by "(cooling start temperature (350°C to 450°C)) - (Ms - 100°C) /cooling time (s) from start of cooling to (Ms - 100°C)".

Five seconds or more residence in temperature range of 100°C to 200°C

In the second cooling step, a residence time of less than 5 seconds in the temperature range of 100°C to 200°C may result in insufficient self-tempering and insufficient formation of the carbide. Thus, the residence time is 5 seconds or more, preferably 10 seconds or more, more preferably 20 seconds or more. To more consistently prevent the size of carbide from exceeding 200 nm, the residence time is preferably 100 seconds or less, more preferably 80 seconds or less.

The Ms temperature is a martensite transformation start temperature and can be calculated using the following formula.

Ms (°C) = 539 - 423 × {[C% by mass] × 100/(100 - [α% by area])} - 30 × [Mn% by mass] - 12 × [Cr% by mass] - 18 × [Ni% by mass] - 8 × [Mo% by mass]

In this formula, [M% by mass] (M: element) denotes the amount of each element in the steel sheet. [α% by area] denotes the area fraction (%) of ferrite in the steel sheet microstructure after annealing.

[Reheating Step]

In this step, a steel sheet in the second cooling step is reheated to perform tempering of martensite necessary to manufacture a steel sheet according to the present invention and at the same time to reduce the amount of diffusible hydrogen.

In the reheating step, since the galvanized layer is already present on the surface layer of the steel sheet, it is not necessary to consider reoxidation of iron as in the soaking step, and the reheating step can be performed in an atmosphere with a low hydrogen concentration, for example, in an air atmosphere. On the other hand, if the hydrogen concentration is excessively high, the amount of diffusible hydrogen remaining in the steel may not be reduced and may even increase again at an excessive high hydrogen concentration. Thus, the hydrogen concentration in the reheating step is preferably, but not limited to, 0.2% or less by volume.

Reheating temperature: 100°C or more and 450°C or less

A reheating temperature of less than 100°C results in insufficiently tempered martensite and no formation of the carbide and tempered martensite necessary for the present invention. A reheating temperature of less than 100°C also results in an insufficient effect of reducing the amount of diffusible hydrogen in the steel. Thus, the reheating temperature is 100°C or more, preferably 120°C. On the other hand, a reheating temperature of more than 450°C results in a decrease in tensile strength and coarsening of carbide due to excessive tempering, so that a steel sheet according to the present invention cannot be manufactured. On the other hand, more than 450°C may result in zinc coating with a poor appearance. Thus, the reheating temperature is 450°C or less, preferably 430°C or less.

Holding time (holding time in reheating treatment): 5 to 600 seconds

A holding time of less than 5 seconds results in insufficiently tempered martensite, no formation of the carbide and tempered martensite necessary for the present invention, and an insufficient reduction in the amount of diffusible hydrogen in the steel. Thus, the holding time is 5 seconds or more, preferably 10 seconds or more. The holding time is more preferably 15 seconds or more, still more preferably 20 seconds or more.

On the other hand, a holding time of more than 600 seconds may result in not only a decrease in the production efficiency but also a decrease in tensile strength and coarsening of carbide caused by excessive tempering, and a steel sheet according to the present invention may not be manufactured. Thus, the holding time is 600 seconds or less, preferably 500 seconds or less. The holding time is more preferably 400 seconds or less, more preferably 300 seconds or less.

The production conditions other than the above-described conditions can be in accordance with a usual method.

The sheet thickness is preferably, but not limited to, 0.4 mm or more, more preferably 0.6 mm or more. The sheet thickness is preferably 3.2 mm or less, more preferably 3.0 mm or less.

<Member>

Next, a member according to an embodiment of the present invention will be described.

A member according to an embodiment of the present invention is a member manufactured by using the galvanized steel sheet described above (as a material). For example, the galvanized steel sheet as a material is subjected to at least one of forming and joining to manufacture a member.

The galvanized steel sheet has a high yield ratio (YR), high bendability, and high hydrogen embrittlement resistance, and has a tensile strength (TS) of 980 MPa or more and less than 1470 MPa. Thus, a member according to an embodiment of the present invention has a high yield ratio (YR), high bendability, and high hydrogen embrittlement resistance, and has a tensile strength (TS) of 980 MPa or more and less than 1470 MPa. Thus, a member according to an embodiment of the present invention is particularly suitable as a member used in the automotive field.

<Method for Manufacturing Member>

Next, a method for manufacturing a member according to an embodiment of the present invention will be described.

A method for manufacturing a member according to an embodiment of the present invention includes a step of subjecting the above-described galvanized steel sheet (for example, a galvanized steel sheet manufactured by the method for manufacturing a galvanized steel sheet described above) to at least one of forming and joining to manufacture a member.

The forming method may be, but is not limited to, for example, a typical processing method, such as press forming. Furthermore, the joining method may be, but is not limited to, for example, typical welding, such as spot welding, laser welding, or arc welding, riveting, caulking, or the like. The forming conditions and the joining conditions are not particularly limited and may be in accordance with a usual method.

EXAMPLES

The present invention will be more specifically described with reference to Examples. The scope of the present invention is not limited to the following examples.

Hot-dip galvanized steel sheets and hot-dip galvannealed steel sheets were manufactured under the conditions shown in Table 2 using cold-rolled steel sheets with the chemical compositions shown in Table 1 and with a thickness of 1.4 mm and were evaluated as described below.

For all of the steel sheets, in the hot rolling step, the slab heating temperature was 1250°C, the finish rolling delivery temperature was 900°C, and the coiling temperature was 520°C, and the rolling reduction in the cold rolling step was 50%. The reheating treatment in the reheating step was performed in the atmosphere.

Table 3 shows the evaluation results.

The galvanizing treatment (hot-dip galvanizing treatment) and the alloying treatment in the galvanization step were performed under the following conditions. All of the following evaluations were performed within 72 hours after the steel sheets first reached room temperature (40°C or less) after the reheating step defined in the present invention.

- Plating bath composition: Zn bath containing 0.13% by mass of Al
- Plating bath temperature: 460°C
- Coating weight range: 30 to 60 $g/m^{-2}$
- Alloying temperature: 500°C to 560°C
- Degree of alloying range: 8.0% to 14.0% by mass

[Table 1]

| Steel symbol | Chemical composition (% by mass) | | | | | | | |
|---|---|---|---|---|---|---|---|---|
| | C | Si | Mn | P | S | Al | N | Others |
| A | 0.117 | 0.51 | 2.55 | 0.01 | 0.0005 | 0.040 | 0.0020 | - |
| B | 0.092 | 0.62 | 2.64 | 0.02 | 0.0010 | 0.030 | 0.0040 | - |
| C | 0.146 | 1.05 | 3.08 | 0.01 | 0.0010 | 0.050 | 0.0040 | - |
| D | 0.087 | 0.15 | 2.31 | 0.02 | 0.0030 | 0.040 | 0.0040 | - |
| E | 0.152 | 0.72 | 3.12 | 0.02 | 0.0010 | 0.040 | 0.0050 | - |
| F | 0.085 | 0.51 | 4.50 | 0.01 | 0.0005 | 0.040 | 0.0020 | - |
| G | 0.190 | 2.10 | 3.05 | 0.01 | 0.0005 | 0.040 | 0.0020 | - |
| H | 0.050 | 0.95 | 3.05 | 0.02 | 0.0010 | 0.030 | 0.0040 | - |
| I | 0.115 | 0.57 | 2.72 | 0.01 | 0.0005 | 0.040 | 0.0020 | Ti: 0.022 |
| J | 0.123 | 0.85 | 3.35 | 0.01 | 0.0010 | 0.030 | 0.0040 | Ti: 0.025, B: 0.0020 |
| K | 0.177 | 0.83 | 2.99 | 0.01 | 0.0010 | 0.050 | 0.0040 | Nb: 0.032 |
| L | 0.117 | 0.48 | 2.78 | 0.01 | 0.0005 | 0.040 | 0.0020 | Sb: 0.012 |
| M | 0.089 | 0.40 | 2.99 | 0.01 | 0.0010 | 0.030 | 0.0040 | Sn: 0.007 |
| N | 0.114 | 0.71 | 2.71 | 0.01 | 0.0005 | 0.040 | 0.0020 | V: 0.033 |
| O | 0.153 | 1.06 | 2.70 | 0.01 | 0.0010 | 0.050 | 0.0040 | Cu: 0.21 |
| P | 0.099 | 0.64 | 2.89 | 0.01 | 0.0010 | 0.050 | 0.0040 | Cr: 0.50 |
| Q | 0.129 | 0.84 | 2.85 | 0.01 | 0.0005 | 0.040 | 0.0020 | Ni: 0.20 |

(continued)

| Steel symbol | Chemical composition (% by mass) | | | | | | | |
|---|---|---|---|---|---|---|---|---|
| | C | Si | Mn | P | S | Al | N | Others |
| R | 0.096 | 0.55 | 2.91 | 0.01 | 0.0010 | 0.050 | 0.0040 | Mo: 0.50 |
| S | 0.125 | 0.38 | 2.47 | 0.01 | 0.0005 | 0.040 | 0.0020 | Ta: 0.005 |
| T | 0.091 | 0.43 | 2.64 | 0.01 | 0.0010 | 0.050 | 0.0040 | W: 0.015 |
| U | 0.103 | 0.98 | 2.70 | 0.01 | 0.0010 | 0.030 | 0.0040 | Zr: 0.0030 |
| V | 0.154 | 0.70 | 2.98 | 0.01 | 0.0005 | 0.040 | 0.0020 | Ca: 0.0010 |
| W | 0.098 | 0.76 | 2.50 | 0.01 | 0.0010 | 0.050 | 0.0040 | Mg: 0.0020 |
| X | 0.094 | 1.10 | 2.52 | 0.01 | 0.0005 | 0.040 | 0.0020 | Zn: 0.005 |
| Y | 0.094 | 0.60 | 2.63 | 0.01 | 0.0010 | 0.050 | 0.0040 | Co: 0.005 |
| Z | 0.140 | 0.97 | 2.88 | 0.01 | 0.0010 | 0.050 | 0.0040 | Ce: 0.0010 |
| AA | 0.134 | 1.07 | 2.63 | 0.01 | 0.0005 | 0.040 | 0.0020 | Se: 0.0020 |
| AB | 0.086 | 0.88 | 2.99 | 0.01 | 0.0010 | 0.050 | 0.0040 | Te: 0.0080 |
| AC | 0.151 | 0.51 | 2.46 | 0.01 | 0.0005 | 0.040 | 0.0020 | Ge: 0.0080 |
| AD | 0.099 | 0.31 | 2.59 | 0.01 | 0.0010 | 0.050 | 0.0040 | As: 0.0070 |
| AE | 0.125 | 0.56 | 2.54 | 0.01 | 0.0005 | 0.040 | 0.0020 | Sr: 0.0070 |
| AF | 0.125 | 0.84 | 2.46 | 0.01 | 0.0010 | 0.050 | 0.0040 | Cs: 0.0050 |
| AG | 0.124 | 0.61 | 2.46 | 0.01 | 0.0005 | 0.040 | 0.0020 | Hf: 0.0030 |
| AH | 0.117 | 0.53 | 3.00 | 0.01 | 0.0010 | 0.050 | 0.0040 | Pb: 0.0020 |
| AI | 0.096 | 1.01 | 2.47 | 0.01 | 0.0005 | 0.040 | 0.0020 | Bi: 0.0020 |
| AJ | 0.128 | 0.90 | 2.88 | 0.01 | 0.0010 | 0.050 | 0.0040 | REM: 0.0030 |
| AK | 0.246 | 1.96 | 3.48 | 0.09 | 0.0192 | 0.090 | 0.0089 | B: 0.0097,Ti: 0.193,Nb: 0.192,Sb: 0.189, Sn: 0.198,V: 0.094,Cu: 1.90,Cr: 1.93, Ni: 1.91Mo: 0.99,Ta: 0.093,W: 0.490, Zr: 0.015,Ca: 0.0197,Mg: 0.0195,Zn: 0.018, Co: 0.017,Ce: 0.0188,Se: 0.0192,Te: 0.0193, Ge: 0.0190,As: 0.0196,Sr: 0.0191,Cs: 0.0189, Hf: 0.0185,Pb: 0.0196,Bi: 0.0191,REM: 0.0185 |

- The remainder other than the above is composed of Fe and incidental impurities.

**EP 4 663 785 A1**

[Table 2]

| No. | Steel symbol | Oxidation step | | Reduction step | | | | Soaking step | | | | First cooling step | | | Alloying treatment after coating step Yes: O No: - | Ms | Second cooling step | | | Reheating step | | Material type |
|---|---|---|---|---|---|---|---|---|---|---|---|---|---|---|---|---|---|---|---|---|---|---|
| | | Oxygen concentration | Highest temperature reached | Highest temperature reached | Holding time | Dew point | Hydrogen concentration | Annealing temperature | Holding time | Dew point | Hydrogen concentration | Dew point | Hydrogen concentration | Average cooling rate | | | Average cooling rate from 350°C to 450°C down to (Ms-100°C) | 100°C to 200°C residence time | Cooling stop temperature | Reheating temperature | Holding time | |
| | | vol. ppm | °C | °C | s | °C | vol. % | °C | s | °C | vol. % | °C | vol. % | °C/s | | °C | °C/s | s | °C | °C | s | |
| 1 | A | 2000 | 650 | 820 | 25 | -35 | 15 | 820 | 50 | -35 | 2 | -35 | 5 | 10 | O | 404 | 5 | 20 | 50 | 300 | 60 | GA |
| 2 | A | 2000 | 650 | 820 | 25 | -20 | 15 | 820 | 50 | -20 | 2 | -35 | 5 | 10 | O | 404 | 5 | 20 | 50 | 300 | 60 | GA |
| 3 | A | 2000 | 650 | 820 | 25 | -35 | 15 | 820 | 50 | -35 | 8 | -35 | 5 | 10 | O | 404 | 5 | 20 | 50 | 300 | 60 | GA |
| 4 | A | 2000 | 650 | 820 | 25 | _-10_ | 15 | 820 | 50 | _-10_ | 8 | -35 | 5 | 10 | O | 404 | 5 | 20 | 50 | 300 | 60 | GA |
| 5 | A | 2000 | 650 | 820 | 25 | -35 | 15 | 820 | 50 | -35 | _10_ | -35 | 5 | 10 | O | 404 | 5 | 20 | 50 | 300 | 60 | GA |
| 6 | A | 2000 | 650 | 820 | 25 | -35 | 15 | 820 | 50 | -35 | 2 | -35 | 5 | 10 | O | 404 | 5 | 20 | 30 | _50_ | 60 | GA |
| 7 | A | 2000 | 650 | 820 | 25 | -35 | 15 | 820 | 50 | -35 | 2 | -35 | 5 | 10 | - | 404 | 5 | 20 | 50 | 300 | 60 | GI |
| 8 | A | 2000 | 650 | 820 | 25 | -35 | 15 | 820 | 50 | -35 | 2 | -35 | 15 | 10 | O | 404 | 5 | 20 | 50 | 300 | 60 | GA |
| 9 | A | 2000 | 650 | 820 | 25 | -35 | 15 | 820 | 50 | -35 | 2 | -35 | 25 | 10 | O | 404 | 5 | 20 | 50 | 300 | 60 | GA |
| 10 | A | 2000 | 650 | 820 | 20 | -35 | 15 | 820 | 50 | -35 | 2 | -35 | 5 | 10 | O | 404 | 5 | 20 | 50 | 300 | 60 | GA |
| 11 | B | 2000 | 650 | 800 | 25 | -35 | 15 | 800 | 50 | -35 | 2 | -35 | 5 | 10 | O | 373 | 5 | 20 | 50 | 200 | 60 | GA |
| 12 | B | 2000 | 650 | 740 | 25 | -35 | 15 | _740_ | 50 | -35 | 2 | -35 | 5 | 10 | O | 330 | 5 | 20 | 50 | 300 | 60 | GA |
| 13 | C | 2000 | 650 | 840 | 25 | -35 | 15 | 840 | 50 | -35 | 8 | -35 | 5 | 10 | O | 384 | 5 | 20 | 50 | 300 | 60 | GA |
| 14 | C | 2000 | 650 | 840 | 25 | -35 | 15 | 840 | 50 | -35 | 8 | -35 | 5 | 10 | O | 384 | _25_ | _4_ | 50 | 300 | 60 | GA |
| 15 | C | 2000 | 650 | 840 | 25 | -35 | 15 | 840 | 50 | -35 | 8 | -35 | 5 | 10 | O | 384 | 5 | 10 | _180_ | 300 | 60 | GA |
| 16 | C | 2000 | 650 | 840 | 25 | -35 | 15 | 840 | 50 | -35 | 8 | -35 | 5 | 10 | O | 384 | 5 | 10 | 50 | 300 | 60 | GA |
| 17 | D | 2000 | 650 | 800 | 25 | -35 | 15 | 800 | 50 | -35 | 2 | -35 | 5 | 10 | O | 403 | 5 | 20 | 50 | 200 | 60 | GA |
| 18 | E | 2000 | 650 | 850 | 25 | -35 | 15 | 850 | 50 | -35 | 2 | -35 | 5 | 10 | O | 380 | 5 | 20 | 50 | 400 | 60 | GA |
| 19 | F | 2000 | 650 | 800 | 25 | -35 | 15 | 800 | 50 | -35 | 2 | -35 | 5 | 10 | O | 367 | 5 | 20 | 50 | 300 | 60 | GA |
| 20 | G | 2000 | 650 | 850 | 25 | -35 | 15 | 850 | 50 | -35 | 2 | -35 | 5 | 10 | O | 365 | 5 | 20 | 50 | 300 | 60 | GA |
| 21 | H | 2000 | 650 | 850 | 25 | -35 | 15 | 850 | 50 | -35 | 2 | -35 | 5 | 10 | O | 419 | 5 | 20 | 50 | 300 | 60 | GA |
| 22 | I | 2000 | 650 | 820 | 25 | -35 | 15 | 820 | 50 | -35 | 2 | -35 | 5 | 10 | O | 402 | 5 | 20 | 50 | 300 | 60 | GA |
| 23 | J | 2000 | 650 | 820 | 25 | -35 | 15 | 820 | 50 | -35 | 2 | -35 | 5 | 10 | O | 381 | 5 | 20 | 50 | 300 | 60 | GA |
| 24 | K | 2000 | 650 | 820 | 25 | -35 | 15 | 820 | 50 | -35 | 2 | -35 | 5 | 10 | O | 365 | 5 | 20 | 50 | 300 | 60 | GA |
| 25 | L | 2000 | 650 | 820 | 25 | -35 | 15 | 820 | 50 | -35 | 2 | -35 | 5 | 10 | O | 395 | 5 | 20 | 50 | 300 | 60 | GA |
| 26 | M | 2000 | 650 | 820 | 25 | -35 | 15 | 820 | 50 | -35 | 2 | -35 | 5 | 10 | O | 406 | 5 | 20 | 50 | 300 | 60 | GA |
| 27 | N | 2000 | 650 | 820 | 25 | -35 | 15 | 820 | 50 | -35 | 2 | -35 | 5 | 10 | O | 402 | 5 | 20 | 50 | 300 | 60 | GA |
| 28 | O | 2000 | 650 | 820 | 25 | -35 | 15 | 820 | 50 | -35 | 2 | -35 | 5 | 10 | O | 375 | 5 | 20 | 50 | 300 | 60 | GA |
| 29 | P | 2000 | 650 | 820 | 25 | -35 | 15 | 820 | 50 | -35 | 2 | -35 | 5 | 10 | O | 401 | 5 | 20 | 50 | 300 | 60 | GA |
| 30 | Q | 2000 | 650 | 820 | 25 | -35 | 15 | 820 | 50 | -35 | 2 | -35 | 5 | 10 | O | 387 | 5 | 20 | 50 | 300 | 60 | GA |
| 31 | R | 2000 | 650 | 820 | 25 | -35 | 15 | 820 | 50 | -35 | 2 | -35 | 5 | 10 | O | 399 | 5 | 20 | 50 | 300 | 60 | GA |
| 32 | S | 2000 | 650 | 820 | 25 | -35 | 15 | 820 | 50 | -35 | 2 | -35 | 5 | 10 | O | 405 | 5 | 20 | 50 | 300 | 60 | GA |
| 33 | T | 2000 | 650 | 820 | 25 | -35 | 15 | 820 | 50 | -35 | 2 | -35 | 5 | 10 | O | 416 | 5 | 20 | 50 | 300 | 60 | GA |
| 34 | U | 2000 | 650 | 820 | 25 | -35 | 15 | 820 | 50 | -35 | 2 | -35 | 5 | 10 | O | 403 | 5 | 20 | 50 | 300 | 60 | GA |
| 35 | V | 2000 | 650 | 820 | 25 | -35 | 15 | 820 | 50 | -35 | 2 | -35 | 5 | 10 | O | 366 | 5 | 20 | 50 | 300 | 60 | GA |
| 36 | W | 2000 | 650 | 820 | 25 | -35 | 15 | 820 | 50 | -35 | 2 | -35 | 5 | 10 | O | 412 | 5 | 20 | 50 | 300 | 60 | GA |
| 37 | X | 2000 | 650 | 820 | 25 | -35 | 15 | 820 | 50 | -35 | 2 | -35 | 5 | 10 | O | 420 | 5 | 20 | 50 | 300 | 60 | GA |
| 38 | Y | 2000 | 650 | 820 | 25 | -35 | 15 | 820 | 50 | -35 | 2 | -35 | 5 | 10 | O | 410 | 5 | 20 | 50 | 300 | 60 | GA |
| 39 | Z | 2000 | 650 | 820 | 25 | -35 | 15 | 820 | 50 | -35 | 2 | -35 | 5 | 10 | O | 378 | 5 | 20 | 50 | 300 | 60 | GA |
| 40 | AA | 2000 | 650 | 820 | 25 | -35 | 15 | 820 | 50 | -35 | 2 | -35 | 5 | 10 | O | 387 | 5 | 20 | 50 | 300 | 60 | GA |
| 41 | AB | 2000 | 650 | 820 | 25 | -35 | 15 | 820 | 50 | -35 | 2 | -35 | 5 | 10 | O | 404 | 5 | 20 | 50 | 300 | 60 | GA |
| 42 | AC | 2000 | 650 | 820 | 25 | -35 | 15 | 820 | 50 | -35 | 2 | -35 | 5 | 10 | O | 393 | 5 | 20 | 50 | 300 | 60 | GA |
| 43 | AD | 2000 | 650 | 820 | 25 | -35 | 15 | 820 | 50 | -35 | 2 | -35 | 5 | 10 | O | 410 | 5 | 20 | 50 | 300 | 60 | GA |
| 44 | AE | 2000 | 650 | 820 | 25 | -35 | 15 | 820 | 50 | -35 | 2 | -35 | 5 | 10 | O | 395 | 5 | 20 | 50 | 300 | 60 | GA |
| 45 | AF | 2000 | 650 | 820 | 25 | -35 | 15 | 820 | 50 | -35 | 2 | -35 | 5 | 10 | O | 400 | 5 | 20 | 50 | 300 | 60 | GA |
| 46 | AG | 2000 | 650 | 820 | 25 | -35 | 15 | 820 | 50 | -35 | 2 | -35 | 5 | 10 | O | 408 | 5 | 20 | 50 | 300 | 60 | GA |
| 47 | AH | 2000 | 650 | 820 | 25 | -35 | 15 | 820 | 50 | -35 | 2 | -35 | 5 | 10 | O | 390 | 5 | 20 | 50 | 300 | 60 | GA |
| 48 | AI | 2000 | 650 | 820 | 25 | -35 | 15 | 820 | 50 | -35 | 2 | -35 | 5 | 10 | O | 420 | 5 | 20 | 50 | 300 | 60 | GA |
| 49 | AJ | 2000 | 650 | 820 | 25 | -35 | 15 | 820 | 50 | -35 | 2 | -35 | 5 | 10 | O | 383 | 5 | 20 | 50 | 300 | 60 | GA |
| 50 | AK | 2000 | 650 | 840 | 25 | -35 | 15 | 840 | 250 | -35 | 2 | -35 | 5 | 10 | O | 262 | 5 | 20 | 50 | 300 | 300 | GA |

* The underlines indicate outside the scope of the present invention.

<Tensile Test>

A JIS No. 5 test piece for tensile test (JIS Z 2201) was taken from the resulting galvanized steel sheet in the direction perpendicular to the rolling direction and was subjected to a tensile test according to the provisions of JIS Z 2241 (2011) at a strain rate of $10^{-3}$/s to determine the yield strength (YS), tensile strength (TS), elongation (EL), and yield ratio (YR = YS/TS). Those with a TS of 980 MPa or more and less than 1470 MPa and a YR of 0.60 or more were defined as examples of the present invention.

When the product of EL and TS was 10000 or more, the TS-EL balance was evaluated to be good.

<Microstructure Observation>

A test specimen for microstructure observation was taken from the resulting galvanized steel sheet, a cross section of the steel sheet in the thickness direction parallel to the rolling direction was polished and then corroded with a nital solution, and the microstructures of three visual fields in a region from the surface to 1/8 of the sheet thickness and a region from 1/8 to 3/8 of the sheet thickness were photographed with a SEM at a magnification of 1500 times.

The area fraction of retained austenite was individually determined by measuring the X-ray diffraction intensity, and the area fraction of as-quenched martensite was determined by subtracting the area fraction of retained austenite from the area fraction of a white portion (as-quenched martensite and retained austenite). The area fraction of retained austenite was determined from the ratio of the integrated X-ray diffraction intensity of (200), (220), and (311) planes in fcc iron to the integrated X-ray diffraction intensity of (200), (211), and (220) planes in bcc iron at a quarter thickness. The retained austenite is calculated as a volume fraction by the above measurement and, assuming that the retained austenite is three-dimensionally homogeneous, the volume fraction of the retained austenite is defined as the area fraction of the retained austenite.

The area fraction of each constituent phase was determined by the above-described method from an image thus taken. As the constituent phase area fraction in each region, an average value in all the photographed images was used.

In a region from 1/8 to 3/8 of the thickness of the steel sheet (base steel sheet), the microstructure of one visual field was photographed with a SEM at a magnification of 5000 times to determine the number and the total area of carbides in prior-austenite grains including the martensite from the image, and the area per piece of carbide was calculated to determine the average grain size of the carbides. Here, the average grain size is an average value of a major axis length and a minor axis length when the grain is approximated to an ellipse. For a piece of carbide, in the SEM image, a region integrally formed without interruption is regarded as a piece to be measured.

<Quantitative Determination of Hydrogen in Steel>

An approximately 5 x 30 mm test specimen for hydrogen analysis was taken from a galvanized steel sheet, the galvanized layer on the surface was removed with a precision grinder, the test specimen was immediately put into a quartz tube whose atmosphere was replaced with Ar gas, the test specimen was heated to 600°C at a heating rate of 200°C/h, and the amount of hydrogen released during heating was measured by gas chromatography. The integrated amount of hydrogen released in the temperature range of room temperature to 200°C was determined as the "amount of diffusible hydrogen", and the integrated amount of hydrogen released in the temperature range of 350°C or more and 600°C or less was determined as the "amount of trapped hydrogen". Those with an amount of diffusible hydrogen of 0.45 ppm by mass or less were defined as examples of the present invention.

The amount of diffusible hydrogen and the amount of trapped hydrogen were measured after completion of the production of the steel sheet.

<Bending Test>

A 35 mm x 100 mm strip specimen was taken from the resulting galvanized steel sheet such that the direction parallel to the rolling direction became a bending test axis, and a 90-degree V-bending test was performed at a stroke speed of 50 mm/s, at an indentation load of 10 ton, for a press holding time of 5 seconds, and at various bending radii. After the test, a ridge line portion of a bending peak of the test specimen was observed with a 10x magnifier to determine R/t, which is a value calculated by dividing the minimum bending radius R (mm) at which a crack with a length of 0.5 mm or more was not recognized by the sheet thickness t (mm) (t = 1.4 mm). Those satisfying any of (A), (B), and (C) were defined as examples of the present invention.

(A) TS: 980 MPa or more and less than 1100 MPa and R/t: 5.0 or less
(B) TS: 1100 MPa or more and less than 1300 MPa and R/t: 6.0 or less
(C) TS: 1300 MPa or more and less than 1470 MPa and R/t: 7.0 or less

<Evaluation of Hydrogen Embrittlement Resistance>

A 30 mm x 100 mm test specimen was taken from the resulting galvanized steel sheet, a spacer with a thickness of 2 mm was placed at both ends, and the center between the spacers was spot-welded to prepare a welded specimen. For the spot welding, an inverter DC resistance spot welding machine was used, and a dome-shaped electrode with a tip diameter of 6 mm made of chromium copper was used. The welding pressure was 380 kgf, the weld time was 16 cycles/50 Hz, and the holding time was 5 cycles/50 Hz. The welding current value was adjusted so as to form a nugget diameter corresponding to TS. The nugget diameter was 3.8 mm when TS was less than 1250 MPa or 4.8 mm when TS was 1250 MPa or more. After being left to stand for 24 hours from the spot welding, the spacer portion was cut off, a cross section of the nugget was observed for evaluation according to the following criteria, and those with a rank of 1 or 2 were considered to be within the preferred range of the present invention.

| Crack observation result | Rank |
| --- | --- |
| No crack initiation: | 1 (particularly high hydrogen embrittlement resistance) |

**EP 4 663 785 A1**

(continued)

| Crack observation result | Rank |
|---|---|
| Only microcrack of 100 $\mu$m or less occurred: | 2 (high hydrogen embrittlement resistance) |
| Crack of more than 100 $\mu$m: | 3 (low hydrogen embrittlement resistance) |

**23**

[Table 3]

| No. | Steel sheet microstructure Amount of hydrogen in steel | | | | | | | Steel sheet characteristics | | | | | | | Notes |
|---|---|---|---|---|---|---|---|---|---|---|---|---|---|---|---|
| | Ferrite area fraction | Martensite + bainite area fraction | Retained γ area fraction | *1 Area fraction | TM1/TM2 (vol%/vol%) | Amount of diffusible hydrogen (room temperature to 200°C) | Amount of trapped hydrogen (350°C to 600°C) | YS | TS | EL | TS·EL | YR | R/t | Crack observation | |
| | % | % | % | % | | ppm by mass | ppm by mass | MPa | MPa | % | MPa·% | | | | |
| 1 | 10 | 88 | 2 | 90 | 0.78 | 0.24 | 0.09 | 844 | 1205 | 11 | 13255 | 0.70 | 3.9 | 1 | Inventive example |
| 2 | 12 | 87 | 1 | 85 | 0.72 | 0.42 | 0.07 | 820 | 1198 | 12 | 14376 | 0.68 | 5.0 | 2 | Inventive example |
| 3 | 10 | 88 | 2 | 90 | 0.78 | 0.33 | 0.09 | 820 | 1185 | 12 | 14220 | 0.69 | 4.3 | 2 | Inventive example |
| 4 | 15 | 82 | 3 | 85 | 0.61 | 0.47 | 0.02 | 844 | 1205 | 11 | 13255 | 0.70 | 6.4 | 3 | Comparative example |
| 5 | 10 | 88 | 2 | 90 | 0.78 | 0.47 | 0.09 | 818 | 1190 | 12 | 14280 | 0.69 | 6.4 | 3 | Comparative example |
| 6 | 10 | 87 | 3 | 65 | 0.64 | 0.48 | 0.03 | 740 | 1208 | 11 | 13288 | 0.61 | 6.4 | 3 | Comparative example |
| 7 | 10 | 88 | 2 | 90 | 0.77 | 0.40 | 0.09 | 822 | 1210 | 11 | 13310 | 0.68 | 4.6 | 2 | Inventive example |
| 8 | 10 | 88 | 2 | 90 | 0.78 | 0.32 | 0.09 | 844 | 1205 | 11 | 13255 | 0.70 | 3.9 | 2 | Inventive example |
| 9 | 10 | 88 | 2 | 90 | 0.78 | 0.40 | 0.09 | 844 | 1205 | 11 | 13255 | 0.70 | 3.9 | 2 | Inventive example |
| 10 | 11 | 87 | 2 | 89 | 0.79 | 0.26 | 0.07 | 841 | 1201 | 11 | 13211 | 0.69 | 3.9 | 1 | Inventive example |
| 11 | 37 | 60 | 3 | 85 | 0.82 | 0.16 | 0.14 | 713 | 1040 | 14 | 14560 | 0.69 | 2.9 | 1 | Inventive example |

EP 4 663 785 A1

| No. | Steel sheet microstructure Amount of hydrogen in steel | | | | | | | Steel sheet characteristics | | | | | | | Notes |
|---|---|---|---|---|---|---|---|---|---|---|---|---|---|---|---|
| | Ferrite area fraction | Martensite + bainite area fraction | Retained γ area fraction | *1 Area fraction | TM1/TM2 (vol%/vol%) | Amount of diffusible hydrogen (room temperature to 200°C) | Amount of trapped hydrogen (350°C to 600°C) | YS | TS | EL | TS·EL | YR | R/t | Crack observation | |
| | % | % | % | % | | ppm by mass | ppm by mass | MPa | MPa | % | MPa·% | | | | |
| 12 | 55 | 44 | 1 | 90 | 0.92 | 0.06 | 0.02 | 550 | 950 | 18 | 17100 | 0.58 | 3.9 | 1 | Comparative example |
| 13 | 2 | 97 | 1 | 88 | 0.75 | 0.39 | 0.12 | 1108 | 1350 | 8 | 10800 | 0.82 | 6.1 | 2 | Inventive example |
| 14 | 2 | 97 | 1 | 68 | 0.75 | 0.50 | 0.02 | 1092 | 1395 | 8 | 11160 | 0.78 | 7.5 | 3 | Comparative example |
| 15 | 2 | 92 | 6 | 61 | 0.78 | 0.56 | 0.02 | 1132 | 1491 | 7 | 10437 | 0.76 | 7.5 | 3 | Comparative example |
| 16 | 2 | 96 | 2 | 83 | 0.74 | 0.40 | 0.10 | 1095 | 1361 | 8 | 10888 | 0.80 | 6.1 | 2 | Inventive example |
| 17 | 44 | 55 | 1 | 80 | 0.74 | 0.14 | 0.11 | 709 | 1070 | 13 | 13910 | 0.66 | 2.5 | 1 | Inventive example |
| 18 | 3 | 96 | 1 | 79 | 0.81 | 0.41 | 0.08 | 1090 | 1423 | 8 | 11384 | 0.77 | 6.4 | 2 | Inventive example |
| 19 | 9 | 87 | 4 | 80 | 0.93 | 0.38 | 0.09 | 985 | 1483 | 5 | 7415 | 0.66 | 7.9 | 2 | Comparative example |
| 20 | 4 | 95 | 1 | 72 | 0.89 | 0.50 | 0.01 | 1051 | 1410 | 7 | 9870 | 0.75 | 7.5 | 3 | Comparative example |
| 21 | 9 | 90 | 1 | 70 | 0.85 | 0.48 | 0.01 | 982 | 1270 | 9 | 11430 | 0.77 | 6.4 | 3 | Comparative example |
| 22 | 10 | 88 | 2 | 95 | 0.73 | 0.18 | 0.14 | 846 | 1124 | 12 | 13488 | 0.75 | 3.6 | 1 | Inventive example |

EP 4 663 785 A1

(continued)

| No. | Steel sheet microstructure Amount of hydrogen in steel | | | | | | | Steel sheet characteristics | | | | | | | Notes |
|---|---|---|---|---|---|---|---|---|---|---|---|---|---|---|---|
| | Ferrite area fraction | Martensite + bainite area fraction | Retained $\gamma$ area fraction | *1 Area fraction | TM1/TM2 (vol%/vol%) | Amount of diffusible hydrogen (room temperature to 200°C) | Amount of trapped hydrogen (350°C to 600°C) | YS | TS | EL | TS·EL | YR | R/t | Crack observation | |
| | % | % | % | % | | ppm by mass | ppm by mass | MPa | MPa | % | MPa·% | | | | |
| 23 | 10 | 89 | 1 | 90 | 0.89 | 0.26 | 0.11 | 832 | 1173 | 11 | 12903 | 0.71 | 3.9 | 2 | Inventive example |
| 24 | 10 | 86 | 4 | 94 | 0.72 | 0.23 | 0.11 | 742 | 1203 | 11 | 13233 | 0.62 | 3.9 | 1 | Inventive example |
| 25 | 12 | 87 | 1 | 94 | 0.86 | 0.22 | 0.10 | 769 | 1206 | 13 | 15678 | 0.64 | 3.9 | 1 | Inventive example |
| 26 | 12 | 83 | 5 | 94 | 0.78 | 0.26 | 0.14 | 915 | 1152 | 10 | 11520 | 0.79 | 4.3 | 2 | Inventive example |
| 27 | 12 | 84 | 4 | 89 | 0.72 | 0.26 | 0.10 | 947 | 1157 | 11 | 12727 | 0.82 | 4.3 | 2 | Inventive example |
| 28 | 11 | 84 | 5 | 94 | 0.75 | 0.24 | 0.10 | 854 | 1135 | 11 | 12485 | 0.75 | 3.9 | 1 | Inventive example |
| 29 | 10 | 89 | 1 | 88 | 0.88 | 0.23 | 0.12 | 743 | 1104 | 13 | 14352 | 0.67 | 3.9 | 1 | Inventive example |
| 30 | 10 | 88 | 2 | 94 | 0.74 | 0.20 | 0.11 | 811 | 1161 | 12 | 13932 | 0.70 | 3.6 | 1 | Inventive example |
| 31 | 11 | 86 | 3 | 89 | 0.80 | 0.21 | 0.08 | 917 | 1233 | 13 | 16029 | 0.74 | 3.6 | 1 | Inventive example |
| 32 | 12 | 84 | 4 | 89 | 0.90 | 0.25 | 0.10 | 752 | 1216 | 11 | 13376 | 0.62 | 4.3 | 1 | Inventive example |
| 33 | 11 | 88 | 1 | 94 | 0.84 | 0.22 | 0.08 | 963 | 1113 | 10 | 11130 | 0.87 | 3.9 | 1 | Inventive example |

| No. | Steel sheet microstructure Amount of hydrogen in steel | | | | | | | Steel sheet characteristics | | | | | | | Notes |
|---|---|---|---|---|---|---|---|---|---|---|---|---|---|---|---|
| | Ferrite area fraction | Martensite + bainite area fraction | Retained γ area fraction | *1 Area fraction | TM1/TM2 (vol%/vol%) | Amount of diffusible hydrogen (room temperature to 200°C) | Amount of trapped hydrogen (350°C to 600°C) | YS | TS | EL | TS·EL | YR | R/t | Crack observation | |
| | % | % | % | % | | ppm by mass | ppm by mass | MPa | MPa | % | MPa·% | | | | |
| 34 | 10 | 85 | 5 | 93 | 0.86 | 0.20 | 0.09 | 743 | 1221 | 13 | 15873 | 0.61 | 3.6 | 1 | Inventive example |
| 35 | 11 | 86 | 3 | 89 | 0.81 | 0.25 | 0.10 | 803 | 1131 | 13 | 14703 | 0.71 | 4.3 | 1 | Inventive example |
| 36 | 10 | 87 | 3 | 90 | 0.75 | 0.22 | 0.14 | 867 | 1216 | 11 | 13376 | 0.71 | 3.9 | 1 | Inventive example |
| 37 | 11 | 87 | 2 | 89 | 0.75 | 0.26 | 0.08 | 703 | 1203 | 13 | 15639 | 0.64 | 4.3 | 2 | Inventive example |
| 38 | 10 | 89 | 1 | 90 | 0.83 | 0.23 | 0.09 | 803 | 1240 | 10 | 12400 | 0.65 | 3.9 | 1 | Inventive example |
| 39 | 10 | 90 | 0 | 93 | 0.78 | 0.23 | 0.11 | 859 | 1231 | 10 | 12310 | 0.70 | 3.9 | 1 | Inventive example |
| 40 | 11 | 85 | 4 | 93 | 0.85 | 0.23 | 0.11 | 906 | 1207 | 10 | 12070 | 0.75 | 3.9 | 1 | Inventive example |
| 41 | 10 | 88 | 2 | 95 | 0.91 | 0.22 | 0.08 | 796 | 1163 | 10 | 11630 | 0.68 | 3.9 | 1 | Inventive example |
| 42 | 12 | 84 | 4 | 90 | 0.82 | 0.26 | 0.10 | 900 | 1190 | 11 | 13090 | 0.76 | 4.6 | 2 | Inventive example |
| 43 | 10 | 90 | 0 | 94 | 0.74 | 0.24 | 0.10 | 908 | 1211 | 11 | 13321 | 0.75 | 3.9 | 1 | Inventive example |
| 44 | 12 | 86 | 2 | 95 | 0.88 | 0.24 | 0.14 | 803 | 1185 | 12 | 14220 | 0.68 | 3.9 | 1 | Inventive example |

EP 4 663 785 A1

(continued)

| No. | Steel sheet microstructure | | | | | Amount of hydrogen in steel | | Steel sheet characteristics | | | | | | | Notes |
|---|---|---|---|---|---|---|---|---|---|---|---|---|---|---|---|
| | Ferrite area fraction | Martensite + bainite area fraction | Retained γ area fraction | *1 Area fraction | TM1/TM2 (vol%/vol%) | Amount of diffusible hydrogen (room temperature to 200°C) | Amount of trapped hydrogen (350°C to 600°C) | YS | TS | EL | TS·EL | YR | R/t | Crack observation | |
| | % | % | % | % | | ppm by mass | ppm by mass | MPa | MPa | % | MPa·% | | | | |
| 45 | 12 | 88 | 0 | 88 | 0.87 | 0.24 | 0.14 | 783 | 1190 | 12 | 14280 | 0.66 | 3.9 | 1 | Inventive example |
| 46 | 11 | 88 | 1 | 89 | 0.73 | 0.22 | 0.14 | 893 | 1214 | 11 | 13354 | 0.74 | 3.9 | 1 | Inventive example |
| 47 | 11 | 88 | 1 | 94 | 0.77 | 0.20 | 0.13 | 881 | 1232 | 10 | 12320 | 0.72 | 3.6 | 1 | Inventive example |
| 48 | 11 | 89 | 0 | 91 | 0.90 | 0.26 | 0.09 | 910 | 1201 | 10 | 12010 | 0.76 | 4.6 | 2 | Inventive example |
| 49 | 11 | 85 | 4 | 90 | 0.89 | 0.23 | 0.08 | 802 | 1105 | 12 | 13260 | 0.73 | 4.1 | 1 | Inventive example |
| 50 | 3 | 97 | 0 | 95 | 0.94 | 0.15 | 0.20 | 1380 | 1456 | 7 | 10192 | 0.95 | 6.8 | 2 | Inventive example |

(*1) The ratio of martensite containing carbide with an average grain size of 50 nm or more and 200 nm or less to the entire martensite * The underlines indicate outside the scope of the present invention.

28

The galvanized steel sheets of the inventive examples had a TS of 980 MPa or more and less than 1470 MPa and a YR of 0.60 or more, contained 0.45 ppm by mass or less of diffusible hydrogen in the steel, and had high bendability and hydrogen embrittlement resistance. The steel sheets of the comparative examples were inferior in at least one of TS, YR, bendability, and hydrogen embrittlement resistance.

Furthermore, the members manufactured by performing forming or joining using the galvanized steel sheets of the inventive examples had a TS of 980 MPa or more and less than 1470 MPa and a YR of 0.60 or more, contained 0.45 ppm by mass or less of diffusible hydrogen in the steel, and had high bendability and hydrogen embrittlement resistance.

Industrial Applicability

The present invention can provide a galvanized steel sheet with a TS of 980 MPa or more and less than 1470 MPa, a yield ratio of 0.60 or more, and high bendability and hydrogen embrittlement resistance, which is suitable mainly for automotive part applications.

**Claims**

1. A galvanized steel sheet comprising: a base steel sheet; and a galvanized layer formed on a surface of the base steel sheet, wherein

   the base steel sheet has a steel microstructure including, in terms of area fraction, ferrite: less than 50%, a total of martensite and bainite: 50% or more, and retained austenite: 10% or less,
   75% or more by area of the martensite is tempered martensite containing carbide with an average grain size of 50 nm or more and 200 nm or less,
   a ratio TM1/TM2 of an area fraction TM1 of the tempered martensite to an entire microstructure in a region from the surface to 1/8 of a sheet thickness to an area fraction TM2 of the tempered martensite to the entire microstructure in a region from 1/8 to 3/8 of the sheet thickness is 0.70 or more,
   the galvanized steel sheet has a tensile strength of 980 MPa or more and less than 1470 MPa,
   the galvanized steel sheet has a yield ratio of 0.60 or more, and
   an integrated amount of hydrogen released when the base steel sheet from which the galvanized layer is peeled off is heated from room temperature to 200°C is 0.45 ppm by mass or less.

2. The galvanized steel sheet according to Claim 1, wherein

   the base steel sheet has a steel component containing, on a mass percent basis,
   C: 0.080% or more and 0.300% or less,
   Si: 0.01% or more and 2.00% or less,
   Mn: 1.00% or more and 4.00% or less,
   P: 0.10% or less,
   S: 0.0200% or less,
   Al: 0.003% or more and 0.100% or less, and
   N: 0.0100% or less, and
   the remainder is composed of Fe and incidental impurities.

3. The galvanized steel sheet according to Claim 2, wherein

   the steel component further contains, on a mass percent basis,
   at least one selected from
   B: 0.0100% or less,
   Ti: 0.200% or less,
   Nb: 0.200% or less,
   Sb: 0.200% or less,
   Sn: 0.200% or less,
   V: 0.100% or less,
   Cu: 2.00% or less,
   Cr: 2.00% or less,
   Ni: 2.00% or less,
   Mo: 1.00% or less,

Ta: 0.100% or less,
W: 0.500% or less,
Zr: 0.020% or less,
Ca: 0.0200% or less,
Mg: 0.0200% or less,
Zn: 0.020% or less,
Co: 0.020% or less,
Ce: 0.0200% or less,
Se: 0.0200% or less,
Te: 0.0200% or less,
Ge: 0.0200% or less,
As: 0.0200% or less,
Sr: 0.0200% or less,
Cs: 0.0200% or less,
Hf: 0.0200% or less,
Pb: 0.0200% or less,
Bi: 0.0200% or less, and
REM (excluding Ce): 0.0200% or less.

4. The galvanized steel sheet according to any one of Claims 1 to 3, wherein the galvanized layer is a galvannealed layer.

5. The galvanized steel sheet according to any one of Claims 1 to 4, wherein when the base steel sheet from which the galvanized layer is peeled off is heated from room temperature to 600°C, an integrated amount of hydrogen released in a temperature range of 350°C to 600°C is 0.05 ppm by mass or more.

6. A member produced by using the galvanized steel sheet according to any one of Claims 1 to 5.

7. A method for manufacturing a galvanized steel sheet, the method comprising:

a hot rolling step of heating a slab with the steel component according to Claim 2 or 3 to a temperature range of 1100°C to 1350°C, hot-rolling the slab at a finish rolling delivery temperature of 800°C to 950°C, and coiling the hot-rolled slab at a coiling temperature of 650°C or less;
an oxidation step of heating a steel sheet after the hot rolling step to 600°C or more in an oxidizing atmosphere with an oxygen concentration of 1000 ppm by volume or more and 30000 ppm by volume or less;
a reduction step of holding the steel sheet after the oxidation step at 700°C or more for 20 seconds or more in a reducing atmosphere with a dew point of -20°C or less and a hydrogen concentration of 8% or more by volume and 30% or less by volume;
a soaking step of holding the steel sheet after the reduction step at 750°C or more for 20 seconds or more and 300 seconds or less in a soaking atmosphere with a dew point of -20°C or less and a hydrogen concentration of 0.2% or more by volume and 8% or less by volume;
a first cooling step of cooling the steel sheet after the soaking step;
a galvanization step of forming a galvanized layer on a surface of the steel sheet after the first cooling step;
a second cooling step of cooling the steel sheet after the galvanization step to a cooling stop temperature of 100°C or less at an average cooling rate of 20°C/s or less from a temperature range of 350°C to 450°C down to (Ms temperature - 100°C) while the steel sheet is retained in a temperature range of 100°C to 200°C for 5 seconds or more; and
a reheating step of holding the steel sheet after the second cooling step in a temperature range of 100°C to 450°C for 5 to 600 seconds.

8. The method for manufacturing a galvanized steel sheet according to Claim 7, wherein after the galvanization step, forming the galvanized layer on the surface of the steel sheet is followed by alloying treatment.

9. The method for manufacturing a galvanized steel sheet according to Claim 7 or 8, comprising a cold rolling step of performing cold rolling at a rolling reduction of 20% or more after the hot rolling step and before the oxidation step.

10. The method for manufacturing a galvanized steel sheet according to any one of Claims 7 to 9, wherein in the first cooling step, the steel sheet after the soaking step is cooled from 600°C to 900°C down to 150°C to 500°C at an average cooling rate of 20°C/s or less in an atmosphere with a hydrogen concentration of 0.5% or more by volume and 30% or less by volume and with a dew point of 0°C or less.

11. The method for manufacturing a galvanized steel sheet according to any one of Claims 7 to 10, wherein in the second cooling step, cooling is performed to a cooling stop temperature of 100°C or less at an average cooling rate of 10°C/s or less from a temperature range of 350°C to 450°C down to (Ms temperature - 100°C) while the steel sheet is retained in a temperature range of 100°C to 200°C for 10 seconds or more.

12. A method for manufacturing a member, comprising a step of subjecting the galvanized steel sheet according to any one of Claims 1 to 5 to at least one of forming and joining to manufacture a member.

**EP 4 663 785 A1**

## INTERNATIONAL SEARCH REPORT

International application No.

**PCT/JP2023/016787**

| A. | CLASSIFICATION OF SUBJECT MATTER |
|---|---|

*C21D 9/46*(2006.01)i; *C22C 38/00*(2006.01)i; *C22C 38/60*(2006.01)i; *C23C 2/06*(2006.01)i
FI:  C22C38/00 301T; C22C38/60; C21D9/46 J; C21D9/46 T; C23C2/06

According to International Patent Classification (IPC) or to both national classification and IPC

| B. | FIELDS SEARCHED |
|---|---|

Minimum documentation searched (classification system followed by classification symbols)

C21D9/46; C22C38/00-38/60; C23C2/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/030501 A1 (JFE STEEL CORPORATION) 15 February 2018 (2018-02-15)<br>entire text | 1-12 |
| A | WO 2022/185804 A1 (JFE STEEL CORPORATION) 09 September 2022 (2022-09-09)<br>entire text | 1-12 |
| A | WO 2018/123356 A1 (KABUSHIKI KAISHA KOBE SEIKO SHO) 05 July 2018<br>(2018-07-05)<br>entire text | 1-12 |
| A | WO 2011/093319 A1 (NIPPON STEEL CORPORATION) 04 August 2011 (2011-08-04)<br>entire text | 1-12 |
| A | JP 2015-175050 A (NIPPON STEEL & SUMITOMO METAL CORPORATION) 05 October<br>2015 (2015-10-05)<br>entire text | 1-12 |
| A | WO 2021/200579 A1 (JFE STEEL CORPORATION) 07 October 2021 (2021-10-07)<br>entire text | 1-12 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

32

## INTERNATIONAL SEARCH REPORT

| International application No. |
| --- |
| **PCT/JP2023/016787** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2023/007833 A1 (JFE STEEL CORPORATION) 02 February 2023 (2023-02-02) entire text | 1-12 |
| A | WO 2023/032652 A1 (JFE STEEL CORPORATION) 09 March 2023 (2023-03-09) entire text | 1-12 |
| A | WO 2022/138395 A1 (JFE STEEL CORPORATION) 30 June 2022 (2022-06-30) entire text | 1-12 |

Form PCT/ISA/210 (second sheet) (January 2015)

## INTERNATIONAL SEARCH REPORT
### Information on patent family members

International application No.

**PCT/JP2023/016787**

| Patent document cited in search report | Publication date (day/month/year) | Patent family member(s) | Publication date (day/month/year) |
|---|---|---|---|
| WO 2018/030501 A1 | 15 February 2018 | US 2019/0271052 A1 entire text <br> EP 3467135 A1 <br> KR 10-2019-0022769 A <br> CN 109563582 A | |
| WO 2022/185804 A1 | 09 September 2022 | JP 7111280 B1 entire text | |
| WO 2018/123356 A1 | 05 July 2018 | JP 2018-109222 A entire text | |
| WO 2011/093319 A1 | 04 August 2011 | US 2013/0037180 A1 entire text <br> EP 2530179 A1 <br> CN 102712980 A <br> KR 10-2012-0096109 A | |
| JP 2015-175050 A | 05 October 2015 | (Family: none) | |
| WO 2021/200579 A1 | 07 October 2021 | EP 4130323 A1 entire text <br> KR 10-2022-0145390 A <br> CN 115349028 A <br> JP 2022-23086 A <br> JP 2022-24145 A | |
| WO 2023/007833 A1 | 02 February 2023 | JP 7197062 B1 entire text | |
| WO 2023/032652 A1 | 09 March 2023 | JP 7294544 B1 entire text | |
| WO 2022/138395 A1 | 30 June 2022 | JP 7111279 B1 entire text | |

Form PCT/ISA/210 (patent family annex) (January 2015)

**EP 4 663 785 A1**

REFERENCES CITED IN THE DESCRIPTION

**Patent documents cited in the description**

- WO 2016113788 A
- JP 2011111671 A